# EUROPÄISCHE PATENTSCHRIFT

(11) **EP 1 674 232 B1**
(45) Veröffentlichungstag und Bekanntmachung des Hinweises auf die Patenterteilung: **29.06.2011**
(21) Anmeldenummer: 05023834.4
(22) Anmeldetag: 02.11.2005
(51) Int. Cl.: B29C 45/16, B60K 15/035, F16L 47/28

(54) **Verfahren zur Herstellung eines Stutzens**
Process for making a branch stub
Procédé de fabrication d'un embout

(30) Priorität: 24.12.2004 DE 102004062587; 08.09.2005 DE 102005042678
(43) Veröffentlichungstag der Anmeldung: 28.06.2006
(60) Teilanmeldung: 08017864.3
(73) Patentinhaber: NORMA Germany GmbH, 63277 Maintal (DE)
(72) Erfinder: Kertesz, Janos, 65719 Hofheim (DE)
(74) Vertreter: Knoblauch, Andreas

(56) Entgegenhaltungen:
- EP-A- 1 323 973
- EP-A2- 1 095 962
- WO-A-2004/069574
- DE-A1- 19 953 746
- DE-B1- 1 629 710
- DE-C1- 4 239 909
- GB-A- 2 267 678
- JP-A- 2003 072 399
- US-A1- 2001 013 675
- US-B1- 6 475 424

## Beschreibung

Die Erfindung betrifft ein Verfahren zur Herstellung eines Stutzens zum Verbinden einer Fluidleitung mit einem Behälter aus thermoplastischem Kunststoff, wobei der Stutzen eine erste stutzenförmige, wenigstens einschichtige Materialanordnung und eine zweite stutzenförmige, wenigstens einschichtige Materialanordnung aufweist, von denen die erste Materialanordnung dünner als die zweite Materialanordnung ist und beide als zumindest überwiegenden Bestandteil thermisch verformbares Material aufweisen und eine Schmelzverbindung miteinander eingehen, wobei in einem ersten Schritt die erste Materialanordnung im Extrusions- oder Spritzgussverfahren zu einer ebenen Folie oder Platte oder zu einem Schlauch geformt wird, in einem zweiten Schritt die Folie oder Platte durch Tiefziehen oder der Schlauch durch Blasformen in einen ersten Vorformling mit Stutzenkontur geformt wird, in einem dritten Schritt auf der einen Seite des ersten Vorformlings die zweite Materialanordnung im Spritzguss-, Koinjektions- oder Monosandwich-Verfahren mit Stutzenkontur aufgebracht wird, und im Fall des aus der Folie oder Platte gebildeten ersten Vorformlings dessen Boden vor, in oder nach dem dritten Schritt herausgeschnitten wird.

Ein derartiges Verfahren ist aus EP 1 323 973 A2 bekannt. Dort ist ein flüssigkeits- oder dampfführendes System mit einer Fügezone aus einem koextrudierten Mehrschichtverbund offenbart, das ein Anschlusselement und einen koextrudierten Mehrschichtverbund aufweist, wobei diese beiden Elemente mit einem Hohlkörper verbunden sind. Dabei kann das Anschlusselement die Form eines Stutzens aufweisen und ein- oder mehrschichtig ausgebildet sein. Der koextrudierte Mehrschichtverbund kann aus einer Folie, einer Platte oder aus einem Rohr beispielsweise durch Blasformen oder Tiefziehen hergestellt werden. Der koextrudierte Mehrschichtverbund kann anschließend mit dem Anschlusselement mittels Verschweißen verbunden werden. Es ist aber auch möglich, den koextrudierten Mehrschichtverbund in ein Spritzgießwerkzeug einzulegen und mit dem Material des Anschlusselements zu hinterspritzen.

GB 2 267 678 A offenbart ein Verfahren zur Herstellung eines Stutzens, der eine rohrförmige, zweischichtige erste Materialanordnung und eine zweite stutzenförmige Materialanordnung aufweist. Die rohrförmige Form der ersten Materialanordnung wird dabei mittels Blasformen hergestellt. Die zweite Materialanordnung wird anschließend im Spritzgußverfahren um die erste Materialanordnung herum angeordnet. Die erste und die zweite Materialanordnung können dabei Nylon aufweisen. Nylon ist ein schweißbares Kunststoffmaterial. Durch das Aufbringen der zweiten Materialanordnung mittels Spritzgussverfahren können die erste und die zweite Materialanordnung daher eine Schmelzverbindung eingehen.

Aus DE 42 39 909 C1 ist ein rohrartiger Stutzen mit einem ersten Teil und einem zweiten Teil bekannt, wobei das erste Teil mit dem zweiten Teil durch Umspritzen verbunden wird. Das zweite Teil des Stutzens wird zunächst durch Spritzgießen oder Extrusion hergestellt und anschließend das erste Teil durch Spritzgießen geformt, wobei ein Ende des zweiten Teils durch das Material des ersten Teils umspritzt wird, so dass eine stoffschlüssige Verbindung erhalten wird.

Ein weiteres Verfahren ist aus der DE 199 53 746 C2 bekannt. Dort besteht die erste Materialanordnung aus zwei benachbarten dünnen Schichten und die zweite Materialanordnung aus einer äußeren Schicht, die dicker als die zweischichtige erste Materialanordnung ist und im wesentlichen die mechanische Festigkeit des Stutzens bestimmt. Die drei Schichten sollen im Koinjektions-oder Monosandwich-Verfahren gespritzt werden. Hierbei ist es jedoch äußerst schwierig, die einschichtige erste Materialanordnung erheblich dicker als die zweite Materialanordnung auszubilden, da dann zwei Schichten einer insgesamt dreischichtigen Wand eines Stutzens eine dünne ein- oder zweiteilige Hautschicht bilden, deren gesamte Wanddicke in der Regel geringer als die der Kernschicht ist. So hat die Hautschicht bei einer Koinjektion üblicherweise eine Dicke von maximal etwa 2 mm. Wenn dann die Wandstärke des Stutzens aus Festigkeitsgründen beispielsweise etwa 10 mm betragen und die dickste Schicht außen liegen soll, läßt sich eine solche Schichtanordnung praktisch nicht im Koinjektions- oder Monosandwich-Verfahren herstellen.

Andererseits lassen sich viele Materialien nicht in einem Spritzvorgang mehrschichtig spritzen, sei es im Koextrusionsverfahren oder unmittelbar nacheinander, solange die vorher gespritzte Schicht noch geschmolzen ist, z.B. zuerst eine Aluminium-Schicht und unmittelbar anschließend, solange die Aluminium-Schicht noch geschmolzen ist, eine Kunststoff-Schicht, weil Aluminium eine sehr viel höhere Schmelztemperatur als Kunststoff hat, der der Kunststoff nicht standhalten würde. Ähnliches gilt für Materialien mit unterschiedlichem Fließverhalten.

Der Erfindung liegt die Aufgabe zugrunde, ein Verfahren der eingangs genannten Art anzugeben, bei dem die Dicke und relative Lage der Schichten bei vorgegebener Wandstärke des Stutzens unabhängig von der Funktion der Schichten weitgehend frei wählbar ist.

Erfindungsgemäß ist diese Aufgabe dadurch gelöst, dass die zweite Materialanordnung eine Kernschicht und eine Hautschicht aufweist, die im Koinjektions-oder Monosandwich-Verfahren hergestellt werden, und dass die Hautschicht und die erste Materialanordnung eine Schmelzverbindung eingehen (kompatibel sind), wobei die Hautschicht PE aufweist und die Kernschicht eine Diffusionssperrschicht gegenüber Kohlenwasserstoffen ist, die wenigstens eines der Materialien PA, EVOH, PET, PBT, PBN, PEN, POM, Fluorthermoplast und PPS aufweist.

Bei dieser Lösung kann die dickere Materialanordnung die radial äußere oder innere Materialanordnung des Stutzens bilden, je nachdem, ob der erste Vorformling zum Aufbringen der zweiten Materialanordnung an der entsprechend geformten Innenseite der Außenwand eines Spritzguss-Formwerkzeugs oder an der entsprechend geformten Außenseite eines Kerns im Spritzguss-Formwerkzeug angeordnet wird. Zur Erzielung der gewünschten Dicke der zweiten Materialanordnung wird dann die Dicke des Zwischenraums zwischen dem ersten Vorformling und der Innenseite der Wand bzw. der Außenseite des Kerns des Formwerkzeugs entsprechend gewählt. Die Dicke des ersten Vorformlings wird beim Tiefziehen bzw. Blasformen entsprechend der gewünschten Wandstärke des Stutzens gewählt. Das Material der zweiten Materialanordnung kann entsprechend der gewünschten Festigkeit und Funktion der zweiten Materialanordnung gewählt werden, so dass die zweite Materialanordnung einerseits als Träger des ersten Vorformlings dient und andererseits eine feste Schmelz- oder Schweißverbindung mit dem Material des Behälters, vorzugsweise eines Krattstoff-Tanks eines Kraftfahrzeugs, und des ersten Vorformlings eingeht. Umgekehrt kann das Material des ersten Vorformlings so gewählt werden, dass es mit dem der zweiten Materialanordnung eine feste Schmelz- oder Schweißverbindung eingeht. Wählt man eine vorbestimmte Dicke für die zweite Materialanordnung, dann kann die Kernschicht - bei einer Wandstärke des Stutzens von beispielsweise 10 mm und einer Dicke von nur etwa 2 mm für die erste Materialanordnung bzw. den ersten Vorformling - eine Dicke von 4 mm und die Hautschicht oder die beiderseits der Kernschicht liegenden beiden Hautschichten (wenn die Hautschicht durch die Kernschicht in zwei Hautschichten aufgeteilt ist) jeweils die maximale Dicke von insgesamt 4 mm bzw. 2 mm pro Hautschicht beiderseits der Kernschicht aufweisen. Das Material der Hautschicht(en) ist dabei PE und das der Kernschicht eine Diffusionssperrschicht gegenüber Kohlenwasserstoffen, die wenigstens eines der Materialien PA, EVOH, PET, PBT, PBN, PEN, POM, Fluorthermoplast und PPS aufweist.

Ferner ist es möglich, dass im ersten Schritt eine erste Schicht und eine zweite Schicht und gegebenenfalls eine dritte Schicht, die eine Schmelzverbindung eingehen, im Koextrusionsverfahren oder Schicht für Schicht im Spritzgussverfahren übereinandergeschichtet werden, um die Folie, die Platte oder den Schlauch zu bilden.

Hierbei kann dafür gesorgt sein, dass eine der im ersten Schritt gebildeten Schichten ein Haftvermittler oder eine Diffusionssperrschicht gegenüber Kohlenwasserstoffen ist, die wenigstens eines der Materialien PA, EVOH, PE, PET, PBT, PBN, PEN, POM, PP, Fluorthermoplast, PPS und Metall aufweist, und die zweite Materialanordnung auf der zweiten Schicht aufgebracht wird und wenigstens eines der Materialien PE, PP, PA, PBT, PET, PBN und POM aufweist.

Eine andere der im ersten Schritt gebildeten Schichten weist vorzugsweise eines der Materialien PA, EVOH, PE, PET, PBT, PBN, PEN, POM, PP, Fluorthermoplast, PPS und eine durch einen elektrisch leitfähigen Zusatz leitfähig gemachte thermoplastische Schicht auf.

Die zweite Materialanordnung kann auf der Innenseite oder der Außenseite des ersten Vorformlings aufgebracht werden.

Die Diffusionssperrschicht kann ein Verstärkungsmaterial, insbesondere Glasfasern, aufweisen. Die Kernschicht kann auch ein verstärktes Material aufweisen, z.B. PE oder PP, verstärkt durch Glasfasern, Glaskugeln oder Mineralteilchen.

Sodann ist es möglich, daß die (einteilige) Hautschicht auf der Außenseite oder Innenseite des ersten Vorformlings aufgebracht wird und die zweite Materialanordnung in einem mit dem Behälter zu verbindenden ersten Endabschnitt als Flansch und in einem zweiten Endabschnitt außen mit wenigstens einer Halterippe geformt wird und daß die Kernschicht in den gerippten Endabschnitt und bis an oder in den Flansch eingespritzt wird. Die als Diffusionssperrschicht ausgebildete Kernschicht bildet auf diese Weise gleichzeitig eine Versteifungsschicht zumindest in dem Bereich zwischen dem gerippten Endabschnitt und dem Flansch, da um diesen Bereich die auf ihn aufgeschobene Fluidleitung in der Regel mittels einer Schlauchschelle festgeklemmt wird, so daß dieser Zwischenbereich dem Einspanndruck der Schlauchstelle standhalten muß, ohne sich zu verformen.

Alternativ kann auch die erste Materialanordnung eine erste Schicht und eine zweite Schicht aufweisen, die jeweils gemäß dem ersten Schritt und dem zweiten Schritt zu dem ersten Vorformling und einem zweiten Vorformling geformt werden, und in einem dritten Schritt eine erste Schicht der zweiten Materialanordnung im Spritzgußverfahren zwischen dem ersten und dem zweiten Vorformling eingespritzt und in einem vierten Schritt in die noch plastische Seele der ersten Schicht der zweiten Materialanordnung eine dritte Schicht eingespritzt werden, so daß die erste Schicht der zweiten Materialanordnung eine Hautschicht und die dritte Schicht eine Kernschicht bildet.

Ferner ist es möglich, daß in dem ersten Schritt drei Schichten der ersten Materialanordnung zu der Folie, Platte oder dem Schlauch geformt werden, um daraus den ersten Vorformling gemäß dem zweiten Schritt zu bilden, und daß ein durch Wiederholung der Schritte 1 bis 3 gebildeter zweiter dreischichtiger Vorformling zusammen mit dem ersten dreischichtigen Vorformling in einem Formwerkzeug unter Freihaltung eines Zwischenraums zwischen den Vorformlingen angeordnet und in den Zwischenraum die zweite Materialanordnung in Form einer Hautschicht und einer Kernschicht im Koinjektions- oder Monosandwich-Verfahren eingespritzt wird.

Wenn der Stutzen eine erste stutzenförmige, dreischichtige Materialanordnung aufweist, die im Koinjektions-oder Monosandwich-Verfahren zumindest überwiegend aus thermoplastischem Material hergestellt wird, ist gemäß einer zweiten Lösung der Aufgabe erfindungsgemäß dafür gesorgt, daß die Hautschicht der ersten Materialanordnung mit einer zweiten Materialanordnung, die zumindest überwiegend aus thermoplastischem Material besteht, das mit der Hautschicht der ersten Materialanordnung eine Schmelzverbindung eingeht, verschmolzen wird.

Hierbei entfällt das Tiefziehen bzw. Blasformen, um den ersten Vorformling aus der ersten Materialanordnung zu bilden. Dennoch kann die erste Materialanordnung als Vorformling dünner als die zweite Materialanordnung ausgebildet werden.

Die zweite Materialanordnung kann hierbei auf der ersten Materialanordnung im Spritzgußverfahren aufgebracht werden, so daß sie die erforderliche Dicke aufweist, um dem Stutzen die erforderliche Steifigkeit zu verleihen.

Aus DE 199 53 746 C2 ist ferner bekannt ein Verfahren zur Herstellung eines Stutzens zum Verbinden einer Fluidleitung mit einem Behälter aus thermoplastischem Kunststoff, wobei der Stutzen eine erste, eine zweite und eine dritte rotationssymmetrische Materialanordnung aufweist, die jeweils überwiegend aus thermoplastischem Kunststoff bestehen, wobei die erste Materialanordnung zumindest einschichtig ist, dünner als die zweite Materialanordnung ist und die zweite Materialanordnung umgibt, die dritte Materialanordnung die erste Materialanordnung umgibt, die erste, zweite und dritte Materialanordnung durch eine Schmelzverbindung verbunden sind und einen Flansch des Stutzens auf Seiten des Behälters bilden und die erste Materialanordnung sowie die zweite Materialanordnung bis an eine mit dem Behälter zu verbindende Fläche des Flansches reichen.

Auch demgegenüber besteht eine erfindungsgemäße Lösung der Aufgabe darin, dass in einem ersten Schritt die erste Materialanordnung im Extrusions- oder Spritzgussverfahren zu einer ebenen Folie oder Platte oder zu einem Schlauch geformt wird, dass in einem zweiten Schritt die

Folie oder Platte durch Tiefziehen oder der Schlauch durch Blasformen in einen Vorformling geformt wird, dass in einem dritten Schritt die zweite Materialanordnung auf der einen Seite des Vorformlings im Spritzgussverfahren aufgebracht wird, dass in einem vierten Schritt die dritte Materialanordnung um einen der mit dem Behälter zu verbindenden Fläche abgekehrten Endabschnitt der ersten Materialanordnung im Spritzgussverfahren im Bereich des Flansches herumgespritzt wird und dass im Fall des aus der Folie oder Platte gebildeten Vorformlings dessen Boden vor, in oder nach dem dritten Schritt herausgeschnitten wird.

Hierbei wird das erfindungsgemäße Verfahren nur in dem Bereich des Flansches des Stutzens ausgeführt.

Bei diesem Verfahren weist die erste Materialanordnung eine Diffusionssperrschicht, die zweite Materialanordnung Polyethylen und die dritte Materialanordnung wiederum eine Diffusionssperrschicht auf. Bei dem Material der Diffusionssperrschichten kann es sich wiederum um wenigstens eines der vorstehend zitierten Materialien mit Diffusionssperrfähigkeit für Kohlenwasserstoffe handeln. Vorzugsweise handelt es sich um PA.

Sodann kann die erste Materialanordnung und die dritte Materialanordnung bei der Lösung nach Anspruch 10 elektrisch leitfähige Teilchen aufweisen. Dadurch wird erreicht, dass der Stutzen (wenn die dritte Materialanordnung im wesentlichen PE aufweist) über seine gesamte Länge elektrisch leitfähig ist, um eine elektrostatische Aufladung des Stutzens zu vermeiden.

Ferner kann im ersten Schritt dieser Lösung die erste Materialanordnung im Koextrusionsverfahren mehrschichtig hergestellt werden, wobei wenigstens eine der Schichten elektrisch leitfähig ist. Da diese elektrisch leitfähige Schicht mit der dritten Materialanordnung in Berührung steht, ergibt sich auch in diesem Falle eine elektrische Leitfähigkeit des Stutzens über seine gesamte Länge.

Die Erfindung und ihre Weiterbildungen werden nachstehend anhand der beiliegenden Zeichnungen bevorzugter Ausführungsbeispiele näher beschrieben. Darin stellen dar:
- Fig. 1: einen nach einem ersten Ausführungsbeispiel hergestellten Stutzen,
- Fig. 2: einen nach einem zweiten Ausführungsbeispiel hergestellten Stutzen,
- Fig. 3: einen nach einem dritten Ausführungsbeispiel hergestellten Stutzen,
- Fig. 4: einen nach einem vierten Ausführungsbeispiel hergestellten Stutzen,
- Fig. 5: einen nach einem fünften Ausführungsbeispiel hergestellten Stutzen,
- Fig. 6: einen nach einem sechsten Ausführungsbeispiel hergestellten Stutzen,
- Fig. 7: einen nach einem siebten Ausführungsbeispiel eines erfindungsgemäßen Verfahrens herge- stellten Stutzen,
- Fig. 8: einen nach einem achten Ausführungsbeispiel eines erfindungsgemäßen Verfahrens herge- stellten Stutzen,
- Fig. 9: einen nach einem neunten Ausführungsbeispiel eines erfindungsgemäßen Verfahrens herge- stellten Stutzen,
- Fig. 10: einen nach einem zehnten Ausführungsbeispiel hergestellten Stutzen,
- Fig. 11: einen nach einem elften Ausführungsbeispiel des erfindungsgemäßen Verfahrens hergestell- ten Stutzen,
- Fig. 12: einen nach einem zwölften Ausführungsbeispiel des erfindungsgemäßen Verfahrens hergestell- ten Stutzen,
- Fig. 13: einen nach einem dreizehnten Ausführungsbei- spiel hergestellten Stutzen,
- Fig. 14: einen nach einem vierzehnten Ausführungsbei- spiel hergestellten Stutzen,
- Fig. 15: einen nach einem fünfzehnten Ausführungsbei- spiel des erfindungsgemäßen Verfahrens herge- stellten Stutzen,
- Fig. 16: einen nach einem sechzehnten Ausführungsbei- spiel des erfindungsgemäßen Verfahrens herge- stellten Stutzen,
- Fig. 17: einen nach einem siebzehnten Ausführungsbei- spiel hergestellten Stutzen,
- Fig. 18: einen nach einem achtzehnten Ausführungsbei- spiel des erfindungsgemäßen Verfahrens herge- stellten Stutzen und

- Fig. 19: einen nach einem neunzehnten Ausführungsbei- spiel des erfindungsgemäßen Verfahrens herge- stellten Stutzen.

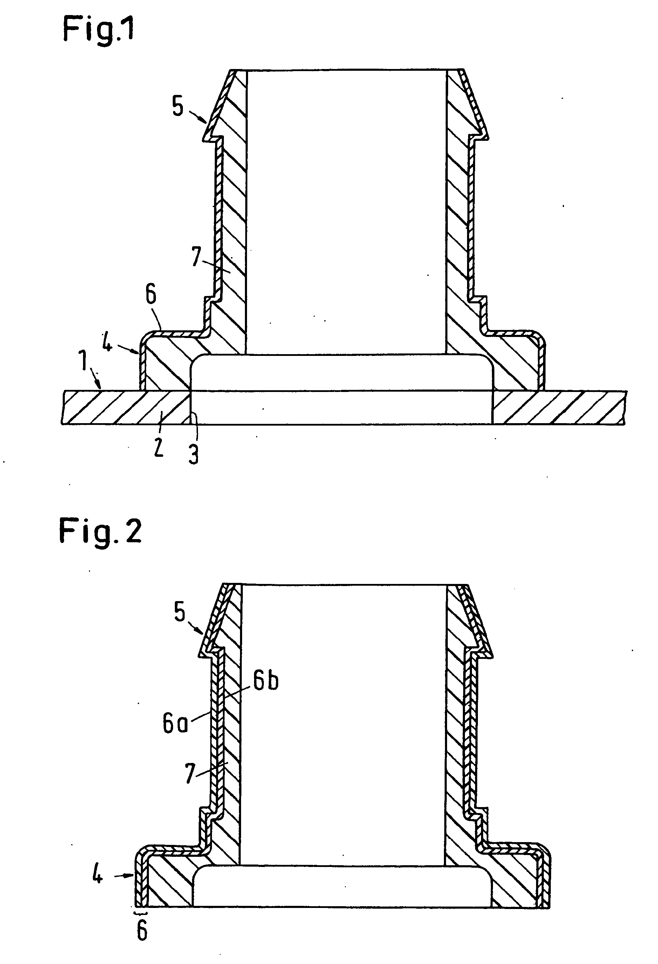

Die in den Fig. 1 bis 6, 10, 13, 14 und 17 dargestellten Ausführungsbeispiele dienen nur der Veranschaulichung.

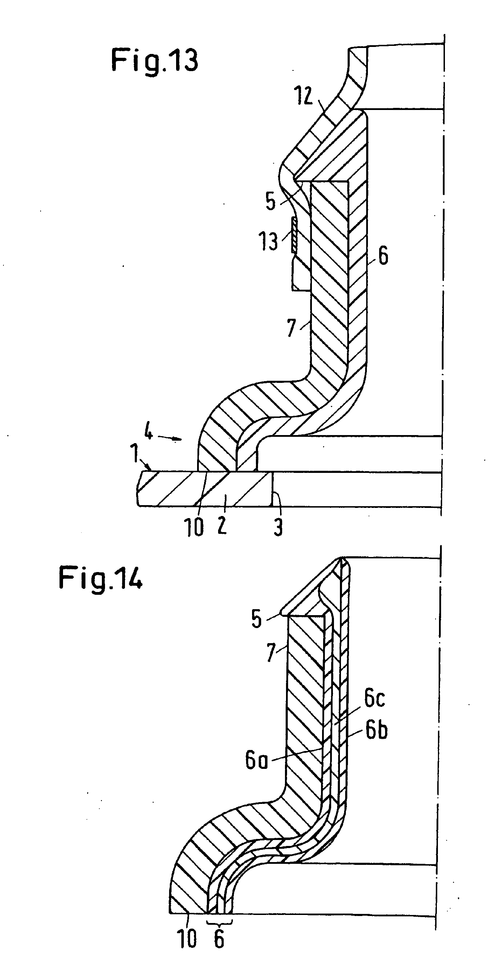

Die in den Fig. 1 bis 12 dargestellten Stutzen sind mehrschichtig aufgebaut und dienen zum Verbinden einer (nur in Fig. 13, 15 und 18 dargestellten) Fluidleitung, z.B. eines Schlauches aus diffusionsdichtem Kunststoff, mit einem überwiegend aus Kunststoff bestehenden Behälter 1 für Kohlenwasserstoffe, hier einem Kraftfahrzeug-Tank für Benzin oder Dieselöl, von dem nur eine Wand 2 mit einer Einfüllöffnung 3 dargestellt ist. Die Fluidleitung kann zusätzlich einen elektrisch leitenden Zusatz gegen eine elektrostatische Aufladung aufweisen. Jeder Stutzen besteht ebenfalls zumindest überwiegend aus thermoplastischem Kunststoff und wird stoffschlüssig mit dem Rand der Einfüllöffnung 3 verbunden, hier verschweißt, so dass sich eine Schmelzverbindung zwischen Stutzen und Behälter 1 ergibt. Bei jedem Stutzen ist der behälterseitige Endabschnitt mit einem umlaufenden Flansch 4 und der dem Behälter 1 abgewandte Endabschnitt mit einer umlaufenden Halterippe 5 versehen. In dem Bereich zwischen Flansch 4 und Halterippe 5 nach den Fig. 1 bis 12 ist der Stutzen etwas dünner. Beim Anschließen der Fluidleitung wird diese bis auf den dünneren Bereich über die Halterippe 5 hinweg auf den Stutzen geschoben und in diesem Bereich mittels einer Schlauchschelle festgeklemmt.

Während der Behälter 1 im wesentlichen HDPE (hochdichtes Polyethylen) mit einer für Kohlenwasserstoffe diffusionssperrfähigen (nicht dargestellten) Zwischenschicht aus PA oder EVOH aufweist, weist der Stutzen nach Fig. 1 außen eine einschichtige erste Materialanordnung 6 auf, die überwiegend aus thermoplastischem Kunststoff besteht, hier einem der diffusionssperrfähigen Materialien PA, EVOH, PET, PBT, PBN, PEN, POM, Fluorthermoplast, PPS. Innen weist der Stutzen eine zweite einschichtige Materialanordnung 7 auf, die ebenfalls überwiegend aus thermoplastischem Kunststoff besteht, hier PE, der mit dem Kunststoff des Behälters 1 und der ersten Materialanordnung 6 kompatibel, d.h. verschweißbar, ist und eine Schmelzverbindung eingeht. Soweit erforderlich, kann die zweite Materialanordnung 7 zur Erzielung der Schmelzverbindung entsprechend haftungsmodifiziert sein. Der thermoplastische Kunststoff der ersten Materialanordnung 6 kann zusätzlich elektrisch leitfähige Teilchen, z.B. aus Graphit oder Metall, aufweisen. Die zweite Materialanordnung 7 ist dagegen vorzugsweise verstärkt, z.B. mit Glas- oder Kohlefasern.

Der Stutzen nach Fig. 1 wird in der Weise hergestellt, daß in einem ersten Schritt die erste Materialanordnung 6 im Extrusions- oder Spritzgußverfahren zu einer ebenen Folie oder Platte oder zu einem Schlauch geformt wird, daß in einem zweiten Schritt die Folie oder Platte durch Tiefziehen oder der Schlauch durch Blasformen in einen ersten Vorformling mit Stutzenkontur geformt wird, daß in einem dritten Schritt auf der einen Seite des ersten Vorformlings die zweite Materialanordnung 7 im Spritzgußverfahren mit Stutzenkontur aufgebracht wird, und daß im Fall des aus der Folie oder Platte gebildeten ersten Vorformlings dessen Boden vor, in oder nach dem dritten Schritt herausgeschnitten wird.

Beide Materialanordnungen 6 und 7 können hierbei, unter Einhaltung der gewünschten Wandstärke des Stutzens, unterschiedlich dick, d.h. z.B. die erste Materialanordnung 6 sehr dünn, wie es für eine Diffusionssperrschicht ausreichend ist, und die zweite Materialanordnung 7 entsprechend dick gewählt werden, so daß sie als Träger für die erste Materialanordnung 6 und zur Erzielung der gewünschten Festigkeit des Stutzens und seiner Verbindung mit dem Behälter 1 dienen kann.

Ein besonderer Vorteil dieses Verfahrens besteht darin, daß auf diese Weise auch Materialanordnungen miteinander verbunden werden können, die sich nicht in nur einem Spritzvorgang (im Koextrusionsverfahren) verbinden lassen, z.B. eine axial durchgehende Metallschicht mit einer Kunststoffschicht, wegen ihrer sehr unterschiedlichen Schmelztemperaturen. Metall hat eine sehr viel höhere Schmelztemperatur als thermoplastischer Kunststoff, so daß der Kunststoff bei der höheren Schmelztemperatur des Metalls zersetzt würde.

Bei dem Ausführungsbeispiel nach Fig. 2 besteht die erste Materialanordnung 6 dagegen aus einer ersten Schicht 6a und einer zweiten Schicht 6b, die eine Schmelzverbindung eingehen, im Koextrusionsverfahren oder Schicht für Schicht im Spritzgußverfahren übereinandergeschichtet werden, um die Folie, die Platte oder den Schlauch zu bilden, und dann wiederum - im Falle der ebenen Folie oder Platte - tiefgezogen bzw. - im Falle des Schlauches - blasgeformt werden, um den stutzenförmigen ersten Vorformling zu bilden. Der erste Vorformling wird dann wiederum mit der zweiten Materialanordnung 7 in der gleichen Weise wie bei dem Ausführungsbeispiel nach Fig. 1 hinterspritzt. Die Dickenverhältnisse können ähnlich dem ersten Ausführungsbeispiel gewählt werden. Während die Materialien der zweiten Materialanordnung 7 wiederum so wie bei dem ersten Ausführungsbeispiel gewählt werden, sind die Materialien der Schichten 6a und 6b der ersten Materialanordnung 6 unterschiedlich gewählt, wobei die äußere Schicht 6a wiederum als Diffusionssperrschicht aus den gleichen Materialien wie die erste Materialanordnung 6 nach Fig. 1 und die mittlere Schicht 6b aus einem Haftvermittler ausgebildet werden kann. Es ist aber auch möglich, die Schicht 6b als Diffusionssperrschicht und die äußere Schicht 6a beispielsweise aus PE oder PA herzustellen, wobei die mittlere Schicht 6b wiederum mit den Schichten 6a und 7 kompatibel (verschmelzbar) sein muß.

Statt die erste Materialanordnung 6 aus den Schichten 6a und 6b durch Tiefziehen oder Blasformen zu dem ersten Vorformling zu formen, ist es auch möglich, den ersten Vorformling aus den Schichten 6a und 6b im Mehrkomponenten-Spritzgußverfahren (eine Schicht nach der anderen) in einem Formwerkzeug herzustellen.

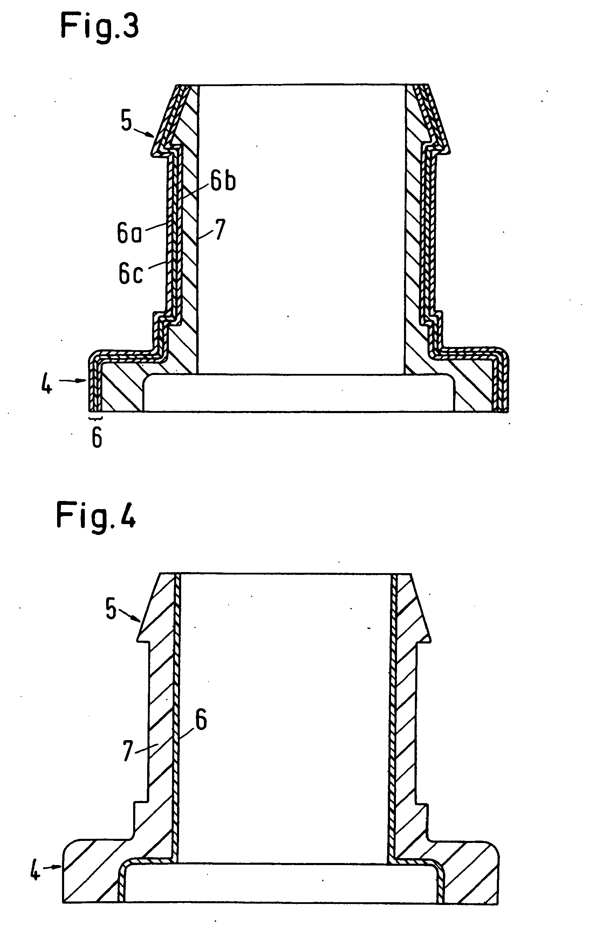

Bei dem Ausführungsbeispiel nach Fig. 3 besteht die erste Materialanordnung 6 aus drei Schichten 6a-6c, deren Materialien so gewählt werden, daß sie mit der jeweils benachbarten Schicht eine Schmelzverbindung eingehen. Desgleichen geht die Schicht 6b eine Schmelzverbindung mit der zweiten Materialanordnung 7 ein. Die Schichten 6a-6c werden zunächst im Koextrusions-Spritzgußverfahren oder Schicht für Schicht im Spritzgußverfahren zu einer ebenen Folie oder Platte oder einem Schlauch übereinandergeschichtet. Aus dieser Schichtanordnung wird dann wiederum der erste Vorformling durch Tiefziehen oder Blasformen gebildet, der dann in einer Spritzgußform angeordnet und mit der zweiten Materialanordnung 7 hinterspritzt wird. Aus dem tiefgezogenen, napfartigen ersten Vorformling wird vor, während oder nach dem Hinterspritzen der zweiten Materialanordnung 7 der Boden herausgeschnitten.

Die Schichten 6a-6c sind insgesamt höchstens ebenso dick wie die zweite Materialanordnung 7, wenn die Wandstärke des Stutzens wiederum nur gleich der des ersten Ausführungsbeispiels ist. Von den drei Schichten 6a-6c bestehen wenigstens zwei aus unterschiedlichen Materialien, wobei eine mit der zweiten Materialanordnung 7 verschmelzbar ist. Beispielsweise ist die radial äußere Schicht 6c durch einen Zusatz elektrisch leitfähig, die mittlere Schicht 6a eine Sperrschicht und die radial innere Schicht 6b ein Haftvermittler, der die Verbindung zwischen der mittleren Schicht 6a und der zweiten Materialanordnung 7 ermöglicht, die wiederum PE aufweist, um sie mit dem Behälter 1 durch Anschmelzen verbinden zu können, aber mit einer Sperrschicht als mittlerer Schicht 6a, die beispielsweise PA oder EVOH aufweist, keine Schmelzverbindung eingeht, sofern das PE der zweiten Materialanordnung 7 nicht so haftungsmodifiziert ist, daß es mit PA oder PE eine Schmelzverbindung eingeht.

Alternativ kann auch die äußere Schicht 6c haftungsmodifiziertes PE, die mittlere Schicht 6a wiederum PA oder EVOH und die zweite Materialanordnung 7 ebenfalls haftungsmodifiziertes PE aufweisen. Das PE der äußeren Schicht 6c würde dann bei gleicher Gesamtwandstärke die gegenüber dem zweiten Ausführungsbeispiel nach Fig. 2 etwas geringere Dicke der zweiten Materialanordnung 7 zur Erzielung der gleichen Festigkeit des Stutzens ausgleichen.

Bei dem Ausführungsbeispiel nach Fig. 4 sind die beiden Materialanordnungen 6 und 7 gegenüber denen nach Fig. 1 vertauscht. D.h., die erste Materialanordnung 6 ist radial innen und die zweite Materialanordnung außen angeordnet, während die Herstellung in der gleichen Weise wie bei dem ersten Ausführungsbeispiel nach Fig. 1 erfolgt: Zuerst wird die Materialanordnung 6 als erster Vorformling aus einer ebenen Folie oder Platte durch Tiefziehen oder aus einem Schlauch durch Blasformen hergestellt. Um den ersten Vorformling wird dann die zweite Materialanordnung 7 im Spritzgußverfahren außen herumgespritzt, wobei der Boden der tiefgezogenen Form vor, während oder nach dem Herumspritzen der zweiten Materialanordnung 7 herausgeschnitten wird. Die Materialien der beiden Materialanordnungen 6 und 7 können wieder die gleichen wie bei dem ersten Ausführungsbeispiel sein.

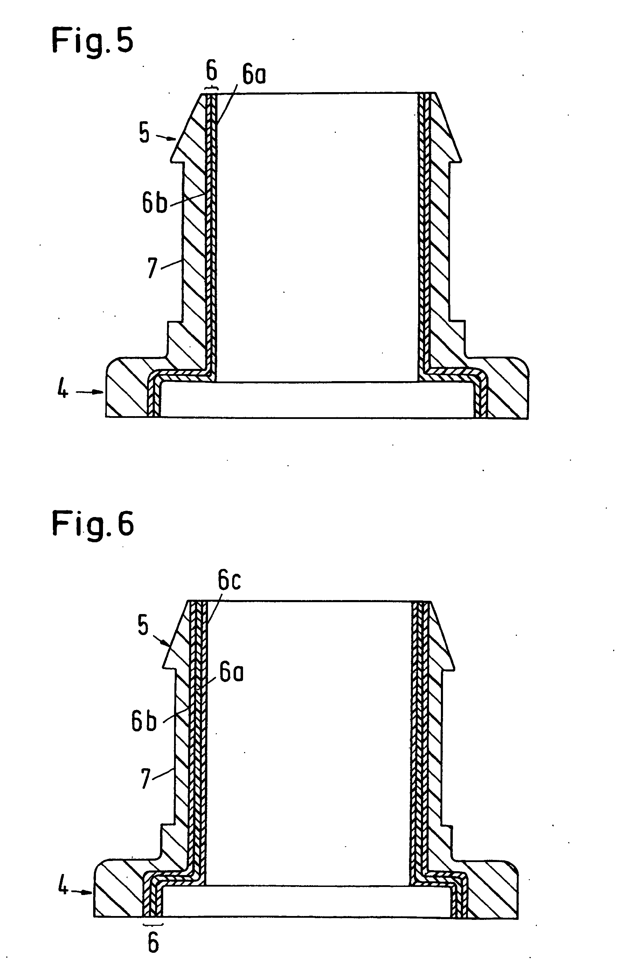

Auch bei dem Ausführungsbeispiel nach Fig. 5 ist lediglich die Lage der beiden Materialanordnungen 6 und 7 gegenüber der beim ersten und zweiten Ausführungsbeispiel vertauscht. Die Herstellung und die Materialien sind aber wieder die gleichen wie bei dem zweiten Ausführungsbeispiel.

Bei dem Ausführungsbeispiel nach Fig. 6 ist ebenfalls nur die Reihenfolge der Materialien 6 und 7 gegenüber der nach Fig. 3 vertauscht, während das Herstellungsverfahren und die Materialien der Materialanordnungen 6 und 7 gegenüber Fig. 3 gleichgeblieben sind.

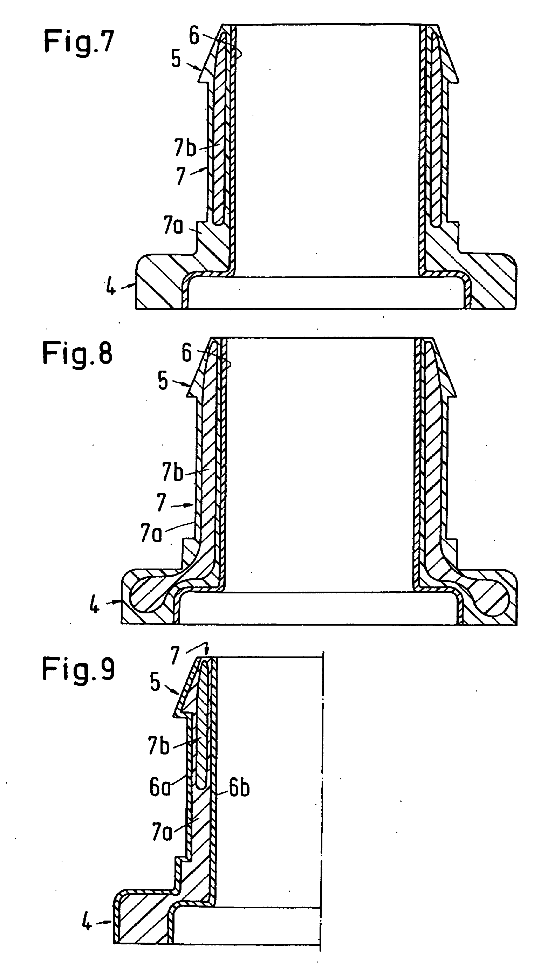

Bei dem Ausführungsbeispiel nach Fig. 7 ist die Reihenfolge der Materialien 6 und 7 ebenfalls gegenüber der nach Fig. 1 vertauscht. Die zweite Materialanordnung 7 besteht jedoch aus zwei Schichten, einer Hautschicht 7a und einer Kernschicht 7b, die in die noch plastische Seele der Hautschicht 7a im Koinjektions- oder Monosandwich-Verfahren eingespritzt wird, nachdem die Hautschicht 7a um die den ersten, ebenso wie bei dem ersten Ausführungsbeispiel hergestellten Vorformling bildende Materialanordnung 6 im Spritzgußverfahren herumgespritzt worden ist. Die Kernschicht 7b kann ein Verstärkungsmaterial, z.B. Glas- oder Kohlefasern, aufweisen oder, wenn die innere Materialanordnung 6 eine Diffusionssperrschicht aus beispielsweise PA oder EVOH bildet, eine zusätzliche Sperrschicht bilden.

Die Kernschicht 7b erstreckt sich aus dem Endabschnitt mit der Halterippe 5 des Stutzens über den dünneren mittleren Bereich des Stutzens bis an den Flansch 4, um bei Ausbildung der Kernschicht 7b als Verstärkungsschicht den mittleren, etwas dünneren Bereich gegenüber dem Einspanndruck der Schlauchschelle höher belastbar auszubilden. Die Kernschicht 7b kann alternativ aber auch als zusätzliche Diffusionssperrschicht ausgebildet sein, wenn die erste Materialanordnung 6 ebenfalls als Diffusionssperrschicht ausgebildet ist, um die Diffusionssperrfähigkeit des Stutzens zu erhöhen.

Das Ausführungsbeispiel nach Fig. 8 unterscheidet sich von dem nach Fig. 7 nur dadurch, daß die Kernschicht 7a länger ausgebildet ist, so daß sie sich bis in den Flansch 4 erstreckt, um die Festigkeit oder Diffusionssperrfähigkeit des Stutzens noch weiter zu erhöhen.

Bei dem Ausführungsbeispiel nach Fig. 9 weist die erste Materialanordnung 6 eine erste Schicht 6a und eine zweite Schicht 6b auf, die jeweils nach dem gleichen Verfahren wie der erste Vorformling aus der ersten Materialanordnung 6 bei dem Ausführungsbeispiel nach Fig. 1 in dem ersten und zweiten Schritt zu einem ersten Vorformling und einem zweiten Vorformling geformt werden. Die beiden Vorformlinge 6a und 6b werden dann mit einem der gewünschten Dicke der zweiten Materialanordnung entsprechenden Abstand zueinander in einem passend geformten Spritzguß-Formwerkzeug angeordnet, und dann wird eine erste Schicht 7a der zweiten Materialanordnung 7 im Spritzgußverfahren zwischen den ersten Vorformling und den zweiten Vorformling, d.h. zwischen die Schichten 6a und 6b, gespritzt und in die noch plastische Seele der ersten Schicht 7a der zweiten Materialanordnung 7 eine dritte Schicht 7b der zweiten Materialanordnung 7 im Koinjektions- oder Monosandwich-Verfahren gespritzt.

Hierbei kann die äußere Schicht 6a thermoplastisches Material mit elektrisch leitenden Teilchen und die innere Schicht 6b diffusionssperrfähiges PA oder EVOH aufweisen, während die Schicht 7a modifiziertes PE und die mittlere Schicht 7b wiederum Verstärkungsmaterial aufweisen kann, aber alle aneinandergrenzenden Schichten miteinander verschmelzbar sein können. Da die Schicht 7b im Material der Schicht 7a eingeschlossen ist, ist es jedoch nicht zwangsläufig erforderlich, daß die Schicht 7b mit der Schicht 7a verschmelzbar (kompatibel) ist. Ferner kann die Schicht 7b axial weiter, z.B. bis an oder in den Flansch 4, eingespritzt werden.

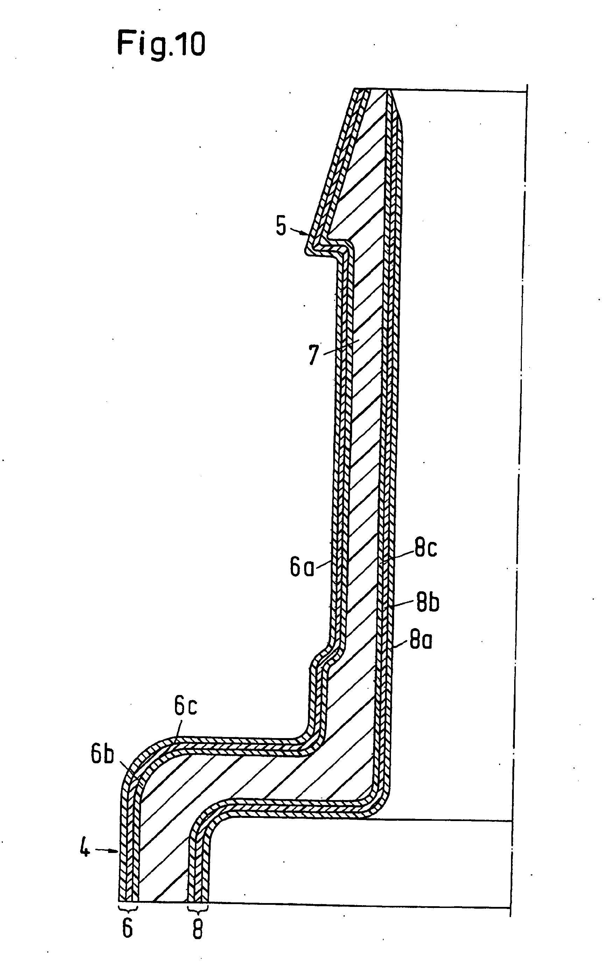

Bei dem Ausführungsbeispiel nach Fig. 10, von dem nur eine Hälfte dargestellt ist, weil die andere wie bei den vorhergehenden Ausführungsbeispielen symmetrisch zu der einen Hälfte ist, ist der Stutzen aus einer ersten stutzenförmigen Materialanordnung 6, die drei Schichten 6a, 6b und 6c aufweist, einer zweiten stutzenförmigen, jedoch einschichtigen Materialanordnung 7 und aus einer dritten stutzenförmigen Materialanordnung 8 mit drei Schichten 8a, 8b und 8c hergestellt. Alle Anordnungen bestehen zumindest überwiegend aus thermoplastischem Kunststoff.

Die erste Materialanordnung 6 wird im Koinjektions-oder Monosandwich-Verfahren als erster Vorformling hergestellt, so daß ihre äußeren Schichten 6a und 6b eine Hautschicht bilden und ihre innere Schicht 6c eine Kernschicht bildet, die etwa ebenso dick bis etwa doppelt so dick wie jede der Schichten 6a und 6b ist.

Die Schichten 6a und 6b weisen PE auf, während die Schicht 6c ein PA oder EVOH aufweist und eine Diffusionssperrschicht für Kohlenwasserstoffe bildet. Die zweite Materialanordnung 7 weist ebenfalls PE auf, so daß sie mit der Schicht 6b eine Schmelzverbindung eingeht.

Die dritte Materialanordnung 8 wird ebenfalls im Koinjektions- oder Monosandwich-Verfahren als zweiter Vorformling hergestellt, so daß ihre äußeren Schichten 8a und 8c eine Hautschicht bilden und ihre innere Schicht 8b eine Kernschicht bildet. Die Schichten 8a, 8c weisen ebenfalls PE auf, während die innere Schicht 8b ein PA oder EVOH aufweist, so daß letztere eine Diffusionssperrschicht für Kohlenwasserstoffe bildet. Mithin geht auch die Schicht 8c mit der Materialanordnung 7 eine Schmelzverbindung ein, da sie beide PE aufweisen. Während die Schichten 8a und 8c etwa gleich dick sind, ist die Schicht 8b etwa ebenso dick bis doppelt so dick wie eine der Schichten 8a, 8c. Dies ist ebenso wie bei der Schicht 6c dadurch möglich, daß die maximale Dicke der Materialanordnungen 6 und 8 durch entsprechend dünne Ausbildung der Kavität des Formwerkzeugs, in dem das Koinjektions- bzw. Monosandwich-Verfahren zur Herstellung der Materialanordnungen 6 und 8 ausgeführt wird, gleich dem 2- bis 4-fachen der Hautschichten gewählt wird, deren Dicke bei einem Koinjektions- bzw. Monosandwich-Verfahren in der Regel konstant bei 1 bis 2 mm liegt.

Alternativ können die Materialanordnungen 6 und 8 jedoch auch im Koextrusions-Spritzgußverfahren oder ihre Schichten nacheinander Schicht für Schicht im Extrusions-Spritzgußverfahren übereinander zu einer Folie oder Platte oder einem Schlauch gespritzt und dann die Folie oder Platte durch Tiefziehen oder der Schlauch durch Blasformen zu dem ersten bzw. zweiten Vorformling geformt werden, wonach die beiden Vorformlinge dann wiederum mit einem Zwischenraum zwischen sich in einer entsprechend geformten Spritzgußform angeordnet werden und die zweite Materialanordnung 7 in den Zwischenraum gespritzt wird. Im Falle der tiefgezogenen Vorformlinge kann ihr Boden wiederum vor, während oder nach dem Einspritzen der zweiten Materialanordnung 7 herausgeschnitten werden, um die an beiden Enden offene Stutzenform zu erhalten. Ferner ist es möglich, bei dem Ausführungsbeispiel nach Fig. 10 die erste Materialanordnung 6 oder die dritte Materialanordnung 8 wegzulassen.

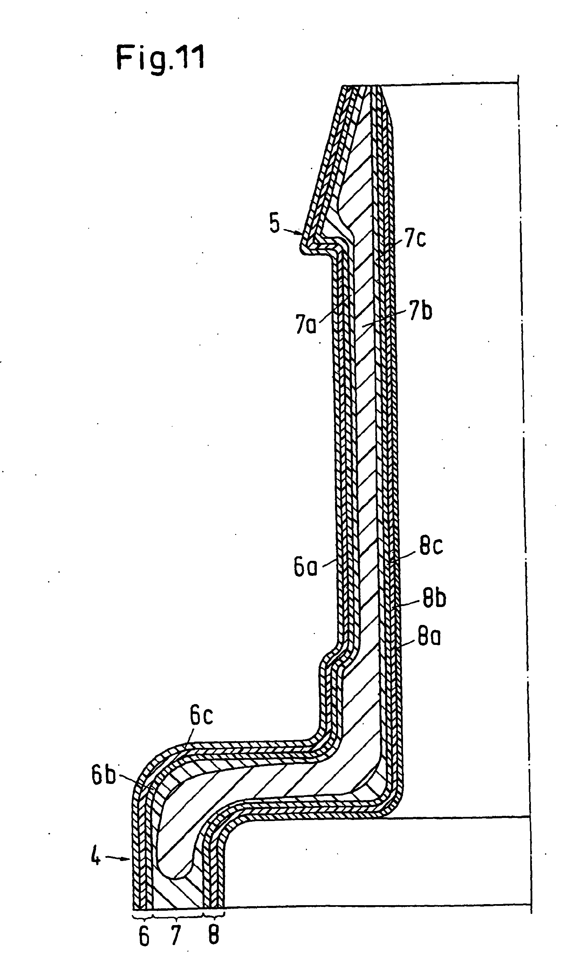

Bei der Ausführungsform nach Fig. 11 können nicht nur die Materialanordnungen 6 und 8 wie bei dem Ausführungsbeispiel nach Fig. 10 im Koinjektions- oder Monosandwich-Verfahren, sondern auch die zweite Materialanordnung 7 nach der Fertigstellung des ersten und zweiten Vorformlings in einem Formwerkzeug in den Zwischenraum zwischen diesen beiden Vorformlingen im Koinjektions- oder Monosandwich-Verfahren gespritzt werden, so daß die äußeren Schichten 7a und 7c der zweiten Materialanordnung 7 ebenfalls eine Hautschicht aus PE bilden und die innere Schicht 7b eine Kernschicht aus PA als Diffusionssperrschicht und Trägerschicht bildet. Dagegen bildet die erste Materialanordnung 6 beiderseits der Kernschicht 6c eine Hautschicht, die PA aufweist, und eine Kernschicht 6c, die EVOH aufweist, und mithin eine weitere Diffusionssperrschicht. Die dritte Materialanordnung 8 kann dann Hautschichten 8a und 8c aus PE und eine Kernschicht 8b aus EVOH als zusätzliche Diffusionssperrschicht aufweisen.

Da die PA aufweisende Kernschicht 7b der zweiten Materialanordnung 7 nicht vollständig, wie dargestellt, bis an das untere, am Behälter 1 anzuschweißende Ende des die Hautschicht(en) 7a und 7c bildenden PE in das PE hineingespritzt ist, ist eine hinreichend große Fläche aus PE vorhanden, die eine feste Schweiß- bzw. Schmelzverbindung mit dem PE des Behälters 1 eingehen kann. Auch hier können die Dickenverhältnisse der Schicht so gewählt werden, daß die Haut- und Kernschichten der Materialanordnungen 6 und 8, unter Einhaltung der erforderlichen Wandstärke des Stutzens, etwa gleich dünn sind, dagegen die Trägerschicht 7b relativ dick, etwa ebenso dick wie ihre Hautschicht(en) 7a, 7c (zusammen) oder dicker ist.

Desgleichen kann auch in diesem Fall die erste Materialanordnung 6 oder die dritte Materialanordnung 8 weggelassen werden.

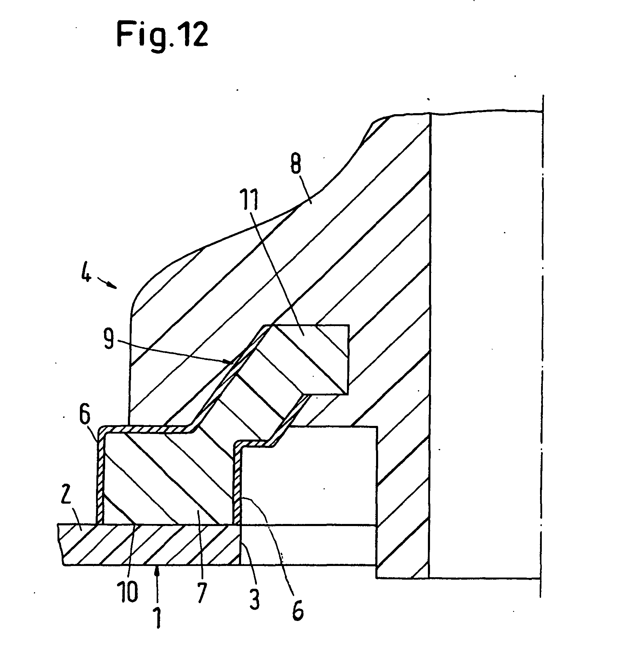

Fig. 12 stellt die eine Hälfte eines Flansches 4 eines nach einem weiteren Ausführungsbeispiel eines erfindungsgemäßen Verfahrens hergestellten Stutzens im Axialschnitt dar. Der nicht dargestellte, dem Behälter 1 abgewandte Teil ist ebenfalls mit einer Halterippe, wie bei den vorhergehenden Ausführungsbeispielen, versehen. Der Stutzen hat ebenfalls eine erste Materialanordnung 6, die radial außerhalb oder innerhalb oder, wie dargestellt, auf beiden Seiten einer zweiten Materialanordnung 7 liegt, und eine dritte Materialanordnung 8, die wie bei den zuvor beschriebenen Stutzen überwiegend aus thermoplastischem Kunststoff bestehen. Die erste Materialanordnung 6 ist einschichtig und hat eine relativ geringe Dicke. Sie umgibt die wesentlich dickere zweite Materialanordnung 7. Die dritte Materialanordnung 8 umgibt einen Endabschnitt 9 der ersten und zweiten Materialanordnung 6, 7, der mithin von der mit dem Behälter 1 zu verbindenden Fläche 10 des Flansches 4 abgekehrt ist. Die Materialanordnungen 6, 7 und 8 können wiederum eine Schmelzverbindung miteinander eingehen.

Die Herstellung dieses Stutzens geschieht wiederum in der Weise, daß in einem ersten Schritt die erste Materialanordnung 6, d.h. die äußere oder innere oder beide, im Extrusions- oder Spritzgußverfahren zu einer ebenen Folie oder Platte oder zu einem Schlauch geformt wird. In einem zweiten Schritt wird die Folie oder Platte wiederum durch Tiefziehen oder der Schlauch durch Blasformen zu einem Vorformling geformt, der die in Fig. 12 dargestellte, abgewinkelte Form aufweist. Allerdings müssen zumindest die Übergänge der Materialanordnung 6 bzw. des aus ihr gebildeten Vorformlings nicht winklig in den Endabschnitt 9 übergehen. Die Übergänge können auch rund sein.

In einem dritten Schritt wird die zweite Materialanordnung 7 auf der einen Seite des aus der äußeren oder inneren Materialanordnung 6 oder aus beiden gebildeten Vorformlings im Spritzgußverfahren aufgebracht (hinterspritzt). In einem vierten Schritt wird die dritte Materialanordnung 8 um den Endabschnitt 9 der ersten und zweiten Materialanordnung 6, 7 im Spritzgußverfahren im Bereich des Flansches 4 herumgespritzt. Dabei wird auch ein nicht von der Materialanordnung 6 abgedeckter Teil 11 der zweiten Materialanordnung 7 durch die dritte Materialanordnung 8 abgedeckt. Im Falle des aus der Folie oder Platte gebildeten Vorformlings wird dessen Boden vor, in oder nach dem dritten Schritt herausgeschnitten.

Die erste Materialanordnung 6 weist eine Diffusionssperrschicht, die zweite Materialanordnung 7 Polyethylen (PE) und die dritte Materialanordnung 8 ebenfalls eine Diffusionssperrschicht für Kohlenwasserstoffe auf. Bei den diffusionssperrfähigen Materialien kann es sich ebenfalls um die im Zusammenhang mit den vorhergehenden Ausführungsbeispielen geschilderten Materialien handeln. Vorzugsweise ist es PA oder EVOH.

Die erste Materialanordnung 6 und die dritte Materialanordnung 8 enthalten elektrisch leitfähige Teilchen, z.B. Teilchen aus Metall, Graphit oder Kohlenstoff. Da die erste Materialanordnung 6 und die dritte Materialanordnung 8 miteinander in Berührung stehen, ergibt sich eine über die gesamte Länge des Stutzens leitfähige Schicht zur Verhinderung einer elektrostatischen Aufladung des Stutzens.

Statt einschichtig kann die erste Materialanordnung 6 bzw. ihre Folie oder Platte im ersten Schritt auch im Koextrusionsverfahren mehrschichtig hergestellt werden, wobei wenigstens eine der Schichten elektrisch leitfähig ist.

Sofern die erste Materialanordnung 6, wie dargestellt, sowohl die radial äußere als auch die radial innere Seite der zweiten Materialanordnung 7 abdeckt, ist das weitgehend nicht diffusionssperrfähige PE der zweiten Materialanordnung 7 durch eine doppelte diffusionssperrfähige Schicht abgedeckt. Dagegen kann die dickere zweite Materialanordnung 7 über die große ringförmige Fläche 10 mit der ebenfalls PE aufweisenden zumindest äußeren Schicht des Behälters 3 eine mechanisch hoch belastbare, feste Schmelzverbindung durch Verschweißen eingehen.

Eine weitere Alternative kann darin bestehen, daß in die zweite Materialanordnung 7, noch bevor sie vollständig ausgehärtet ist, eine weitere Schicht im Koinjektions- oder Monosandwich-Verfahren eingespritzt wird.

Bei dem Ausführungsbeispiel des Stutzens nach Fig. 13, von dem wiederum nur die eine in bezug auf die strichpunktiert dargestellte Mittellinie achsensymmetrische Hälfte dargestellt ist, liegt die dünnere Materialanordnung 6 innen und die dickere Materialanordnung 7 außen. Obwohl die Materialanordnung 6 etwa halb so dick wie die Materialanordnung 7 ist, kann sie auch sehr viel dünner sein. Sie könnte auch etwas dicker als dargestellt sein, sollte aber jedenfalls dünner als 70° der Dicke der Materialanordnung 7 sein.

Die Materialanordnung 6 weist überwiegend einen der erwähnten, gegenüber Kohlenwasserstoffen, wie Benzin oder Dieselöl, diffusionssperrfähigen Kunststoff auf und enthält einen elektrisch leitfähigen Zusatz. Bei dem Zusatz kann es sich um Teilchen aus Graphit, Metall oder Kohlenstoff, zum Beispiel Ruß, oder um sogenannte elektrisch leitfähige Nano-Röhrchen handeln. Nano-Röhrchen haben den Vorteil, daß sie ein verhältnismäßig großes Verhältnis von Länge zu Durchmesser von etwa 100 haben, so daß sie insgesamt mit ziemlicher Sicherheit eine über die gesamte Länge der Materialanordnung 6 durchgehende elektrisch leitende Verbindung bilden. Die Menge des Zusatzes ist dabei so gewählt, daß der elektrische Widerstand der Materialanordnung 6 im Bereich von 100 Ω bis 10⁷ Ω, vorzugsweise etwa 1000 Ω bis 10000 Ω, liegt, so daß sich die Materialanordnung 6 nicht beim Befüllen des Behälters 1 elektrostatisch auflädt.

Die Materialanordnung 7 enthält überwiegend PE, das im Gegensatz zu den diffusionssperrfähigen Kunststoffen mit dem HDPE des Behälters 1 eine Schmelzverbindung eingeht.

Wenigstens eine der beiden Materialanordnungen 6 und 7 ist haftungsmodifiziert, so daß sie ebenfalls eine Schmelzverbindung miteinander eingehen. Wenn der diffusionssperrfähige Kunststoff der Materialanordnung 6 in der Weise haftungsmodifiziert ist, daß er mit dem PE der Materialanordnung 7 eine Schmelzverbindung eingeht, kann er auch mit dem HDPE des Behälters 1 eine Schmelzverbindung eingehen.

Bei der Herstellung des Stutzens nach Fig. 13 wird in einem ersten Schritt die dickere Materialanordnung 7 in einer ersten Formwerkzeugkavität in einen Vorformling mit der dargestellten Stutzenkontur geformt, d.h. mit einem längeren zylindrischen Abschnitt und dem Flansch 4. In einem zweiten Schritt wird dann die dünnere Materialanordnung 6 in einer zweiten Formwerkzeugkavität in die dargestellte Stutzenkontur geformt und gleichzeitig an den ersten Vorformling aus der Materialanordnung 7 angeformt, und zwar derart, daß die dünnere Materialanordnung 6 die dickere Materialanordnung 7 an deren gesamten Innenseite über das der mit dem Behälter 1 zu verbindenden Fläche 10 abgekehrte Ende der Materialanordnung 7 hinaus angeschmolzen und zu der über die Außenseite der Materialanordnung 7 hinausragenden Halterippe 5 geformt wird.

Über die konische Ringfläche der Halterippe 5 hinweg kann dann, nachdem der Stutzen an der Außenseite der Wand 2 des Behälters 1 im Bereich der Fläche 10, zum Beispiel durch Reib- oder Spiegelschweißen, angeschmolzen wurde, die Fluidleitung 12 in Form eines Schlauches bis hinter die Halterippe 5 auf den Stutzen geschoben und, wenn nötig, mit einer Schlauchschelle 13 festgeklemmt werden. Wenn die Fluidleitung 12 ebenfalls einen elektrisch leitfähigen Zusatz enthält, ist die gesamte Verbindung von einem an dem nicht dargestellten Ende der Fluidleitung 12 befestigten Einfüllstutzen aus über die Fluidleitung 12 und die Materialanordnung 6 bis zum Behälter 1 elektrisch leitfähig, so daß sie sich beim Befüllen des Behälters 1 nicht elektrostatisch aufladen kann. Wenn der Behälter 1 zusätzlich eine elektrisch leitende Schicht aufweist, die seine Öffnung 3 und seine Außenseite von der Öffnung bis zum inneren Rand der Fläche 10 abdeckt, reicht die leitende Verbindung auch bis in den Behälter 1. Diese leitende Schicht würde zwar eine Schmelzverbindung der Materialanordnung 6 mit dem Behälter 1 behindern oder verhindern. Wegen ihres elektrisch leitfähigen Zusatzes würde sich die Materialanordnung 6 jedoch auch ohne die leitfähige Schicht des Behälters 1 kaum mit diesem verbinden. Da die Materialanordnung 7 jedoch im Vergleich zur Materialanordnung 6 relativ dick ist, kann die großflächige Verbindung zwischen der Materialanordnung 7 und dem Behälter 1 im wesentlichen allein die Festigkeit der Verbindung zwischen Stutzen und Behälter 1 bestimmen. Aus dem gleichen Grunde ist die Materialanordnung 7 als Träger der dünnen Materialanordnung 6 allein in der Lage, eine hinreichende mechanische Festigkeit des Stutzens zu gewährleisten. Die elektrische Verbindung zwischen der Fluidleitung 12 und der Halterippe 5 der Materialanordnung 6 ermöglicht es ferner, die Materialanordnung 7 von einem elektrisch leitenden, die Schmelzverbindung zwischen der Materialanordnung 7 und dem Behälter 1 zumindest beeinträchtigenden Zusatz frei zu halten.

Grundsätzlich wäre es aber auch möglich, die Materialanordnung 7 dünner als die Materialanordnung 6 und im wesentlichen aus einem diffusionssperrfähigen Kunststoff, mit einem elektrisch leitenden Zusatz, dagegen die Materialanordnung 6 sehr viel dicker als die Materialanordnung 7 im wesentlichen aus einem mit dem Kunststoff des Behälters 1 verschmelzbaren Kunststoff auszubilden, ohne daß sich die Gesamtkontur des Stutzens dadurch ändern würde. Die elektrisch leitfähige Verbindung würde dann über die Materialanordnung 7 bis zum Behälter 1 führen. Bei dieser Abwandlung wäre lediglich eine leitfähige Schicht des Behälters 1 von seiner Öffnung 3 unter dem behälterseitigen Rand der Materialanordnung 6 hindurch bis an oder unter den behälterseitigen Rand der Materialanordnung 7 nicht ratsam, weil sich dann die Materialanordnung 6 schlecht mit dem Behälter 1 verbinden würde. Die Reihenfolge der Herstellung der Vorformlinge aus den Materialanordnungen 6 und 7 wäre dann lediglich umgekehrt: Im ersten Schritt würde der Vorformling aus der Materialanordnung 6 und im zweiten Schritt der Vorformling aus der Materialanordnung 7 geformt und gleichzeitig an die Materialanordnung 6 angeschmolzen, d.h. im noch geschmolzenen Zustand angeformt.

Das Ausführungsbeispiel des Stutzens nach Fig. 14 - der Behälter 1 und die Fluidleitung 12 sind in dieser Darstellung weggelassen - unterscheidet sich von dem nach Fig. 13 nur dadurch, daß die dünnere Materialanordnung 6, bis auf eine innere erste Schicht 6c, aus dem gleichen Material wie die dickere Materialanordnung 7 geformt und in den im Inneren, durch das Spritzgießen noch geschmolzenen Bereich der Materialanordnung 6 von deren spitzen Ende her die Schicht 6c aus einem der erwähnten diffusionssperrfähigen Kunststoffe, vorzugsweise PA oder EVOH, im Koinjektions- oder Monosandwich-Verfahren eingespritzt wird. Dabei bilden die Schichten 6a und 6b eine Hautschicht, und die Schicht 6c eine sich über die gesamte Länge des Stutzens erstreckende, dünnere Kernschicht des zweiten Vorformlings. Die Hautschicht ist wiederum mit einem elektrisch leitfähigen Zusatz versehen, während die innere Schicht 6c ebenfalls mit einem leitfähigen Zusatz versehen sein kann und haftungsmodifiziert ist, so daß sie mit dem PE der Hautschicht 6a, 6b eine Schmelzverbindung eingeht.

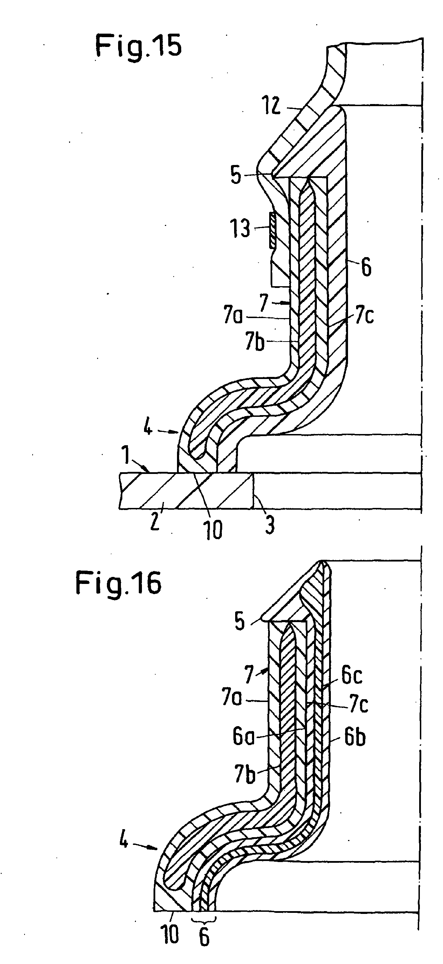

Das Ausführungsbeispiel des Stutzens nach Fig. 15 unterscheidet sich von dem nach Fig. 13 nur dadurch, daß in die Materialanordnung 7 während des ersten Schrittes eine erste Schicht 7b aus einem der erwähnten diffusionssperrfähigen Kunststoffe, vorzugsweise PA oder EVOH, im Koinjektions- oder Monosandwich-Verfahren eingespritzt ist. Dabei erstreckt sich die Schicht 7b von dem Ende der Materialanordnung 7, das dem am Behälter 1 anzuschweißenden Ende abgekehrt ist und den Anguß bildet, über mehr als 50%, vorzugsweise mehr als 90% und weniger als 100% der Länge des Stutzens, bis in den Flansch 4, also nicht bis an das anzuschweißende Ende, so daß das PE der Materialanordnung 7 weiterhin mit der Fläche 10 am Behälter 1 beim Anschweißen eine feste Schmelzverbindung eingehen kann. Bei dieser Ausbildung braucht die Schicht 7b an sich keine Schmelzverbindung mit dem PE der (Haut-)Schichten 7a, 7c der Materialanordnung 7 einzugehen, weil sie vollständig von den Schichten 7a, 7c der Materialanordnung 7 umhüllt ist. Da die Materialanordnung 6 bereits einen diffusionssperrfähigen Kunststoff aufweist, kann die Schicht 7b alternativ einen anderen thermoplastischen Kunststoff aufweisen, der nicht diffusionssperrfähig ist, aber die mechanische Festigkeit der Materialanordnung 7 erhöht. Insbesondere kann sie ein Verstärkungsmaterial enthalten, z.B. Glasfasern oder Kohlefasern.

Bei dem Ausführungsbeispiel des Stutzens nach Fig. 16 ist die Materialanordnung 6 aus den gleichen Schichten 6a bis 6c, im gleichen Schritt und aus den gleichen Materialien wie die Materialanordnung 6 nach Fig. 14 ausgebildet, während die Materialanordnung 7 bei dem Ausführungsbeispiel nach Fig. 16 ebenso ausgebildet ist wie die Materialanordnung 7 des Ausführungsbeispiels nach Fig. 15.

Alternativ können die Materialanordnungen 6 und 7 bei den Ausführungsbeispielen nach den Fig. 14 bis 16 wenigstens noch eine weitere im Koinjektions- oder Monosandwich-Verfahren eingespritzte Schicht aufweisen.

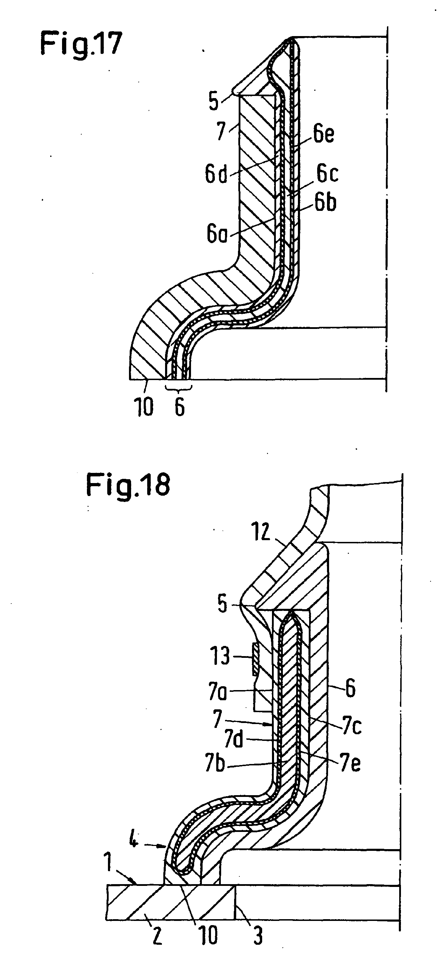

Das Ausführungsbeispiel des Stutzens nach Fig. 17 unterscheidet sich von dem nach Fig. 13 im wesentlichen darin, daß beide Materialanordnungen 6 und 7 bei der Herstellung des Stutzen - abgesehen von dem leitfähigen Zusatz, im vorliegenden Fall Ruß, in der Materialanordnung 6 - zunächst PE aufweisen und während des Spritzens der Materialanordnung 6 in ihren noch geschmolzenen Kern (die "Seele"), während die aus den Schichten 6a und 6b bestehende Haut schon weitgehend ausgehärtet ist, von der am spitzen Ende des Stutzens liegenden Einspritzstelle her eine erste Schicht 6d, 6e im Koinjektions- oder Monosandwich-Verfahren eingespritzt wird. Die erste Schicht 6d, 6e weist ein mit Maleinsäureanhydrid gepfropftes PE auf. Dadurch ist die Schicht 6d, 6e gegenüber einem für Kohlenwasserstoffe, wie Benzin oder Dieselöl, diffusionsperrfähigen PA oder EVOH haftungsmodifiziert.

In den Kern der ersten Schicht 6d, 6e wird dann, nachdem deren Hautschichten 6d und 6e weitgehend ausgehärtet sind, aber ihr Kern noch geschmolzen ist, ein zweite Schicht 6c im Koinjektions- oder Monosandwich-Verfahren eingespritzt. Diese Schicht 6c weist ein PA oder EVOH auf. Wenn PA als Schicht 6c eingespritzt wird, wird dessen Aminoendgruppenkonzentration gleich oder größer als 40 Milliäquivalent pro Kilogramm gewählt. Dadurch geht die Schicht 6d, 6e nicht nur mit dem PE der Materialanordnung 6, sondern auch mit der Schicht 6c eine feste stoffschlüssige Schmelzverbindung ein. Da der Behälter 1 PE oder HDPE und die Materialanordnung 7 ebenfalls PE aufweist, gehen beide weiterhin eine feste stoffschlüssige Schmelzverbindung miteinander ein, wenn der Stutzen am Behälter 1 angeschweißt wird. Da die Materialanordnung 6 in den Schichten 6a und 6b einen leitfähigen Zusatz aufweist, geht sie mit dem Behälter 1 keine sehr feste Schmelzverbindung ein. Insbesondere geht sie mit dem Behälter 1 keine Schmelzverbindung ein, wenn er einen leitfähigen Überzug aufweist, der die Öffnung 3 des Behälters 1 und dessen Außenseite von der Öffnung 3 bis zum radial äußeren Rand des dem Behälter 1 zugekehrten Endes der Materialanordnung 6 abdeckt, wobei eine durchgehend leitfähige Verbindung von der in Fig. 17 nicht dargestellten Fluidleitung 12 über die Schicht 6a, 6b bis in den Behälter 1 entsteht. Auch wenn die Aminoendgruppenkonzentration der PA-Schicht 6c gleich oder größer als 40 Milliäquivalent pro Kilogramm gewählt wird, geht sie mit dem (HD)PE des Behälters keine Schmelzverbindung ein. Jedoch ist die Verbindung zwischen dem PA der Schicht 6c und den PE-Schichten 6a und 6b fester, wenn die haftungsmodifizierten Schichten 6d und 6e vorgesehen sind. Insgesamt ergibt sich dennoch durch die dikkere Materialanordnung 7 eine sehr feste Verbindung zwischen dem Stutzen und dem Behälter 1.

Obwohl die diffusionssperrfähige Schicht 6c in der Materialanordnung 6 von den Schichten 6a und 6b eingeschlossen ist, ist es dennoch vorteilhaft, sie mit diesen Schichten 6a und 6b zu verschmelzen und dadurch zu verbinden. Denn es wäre möglich, daß Benzin oder Dieselöl durch die Schicht 6b zwischen diese und die Schicht 6c hindurchdiffundiert und durch den Diffusions- und/oder Dampfdruck - letzteres insbesondere bei höheren Temperaturen - des hindurchdiffundierenden Kraftstoffs und durch das unterschiedliche Quellverhalten von PE und PA (PE quillt stärker als PA) die Schicht 6b von der Schicht 6c abhebt.

Zwar wäre es möglich, die Schichten 6a und 6b mit Maleinsäureanhydrid zu modifizieren, so daß die erste Schicht 6d, 6e entfallen könnte. Nicht mit Maleinsäureanhydrid haftungsmodifiziertes PE, wie das der Schichten 6a und 6b, hat jedoch den Vorteil, daß es leichter durch einen elektrisch leitfähigen Zusatz, wie Ruß, leitfähig ausgebildet werden kann als ein mit Maleinsäureanhydrid haftungsmodifiziertes PE.

Das Ausführungsbeispiel des Stutzens nach Fig. 18 unterschiedet sich von dem nach den Fig. 15 und 17 dadurch, daß die erste Schicht 7d, 7e und die in diese eingespritzte diffusionssperrfähige zweite Schicht 7b in die Materialanordnung 7 eingespritzt sind. Die erste Schicht 7d, 7e weist mithin dasselbe Material wie die erste Schicht 6d, 6e nach Fig. 17 und die diffusionssperrfähige Schicht 7b dasselbe Material wie die zweite Schicht 6c gemäß Fig. 17 auf. In diesem Fall ist die radial äußere Hautschicht 7a der Materialanordnung 7 zusätzlich durch die Haftungsmodifizierte Schicht 7d, 7e gegen ein Abheben oder Ablösen von der diffusionsperrfähigen Schicht 7b aufgrund äußerer mechanischer Kräfte, zum Beispiel Reibungskräfte, die auf die Schicht 7a einwirken, geschützt.

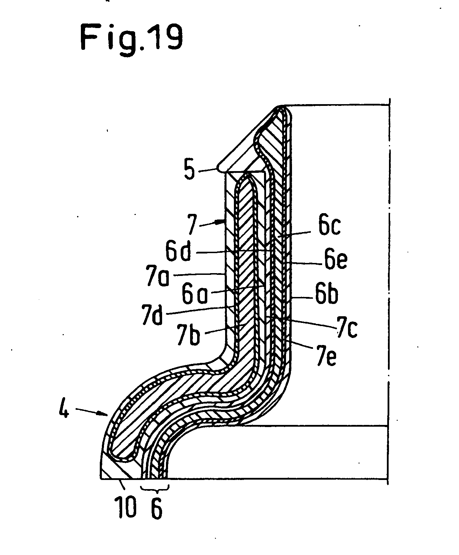

Das Ausführungsbeispiel des Stutzens nach Fig. 19 stellt eine Kombination der Schichten der Materialanordnung 6 nach Fig. 17 mit den Schichten der Materialanordnung 7 nach Fig. 18 dar. Es vereinigt mithin die Vorteile beider Ausführungsbeispiele nach den Fig. 17 und 18 und erhöht die Diffusionssperrfähigkeit durch die Verwendung zweier diffusionssperrfähiger Schichten, daß heißt der beiden Schichten 6c und 7b.

In Fällen, in denen keine sehr hohen Anforderungen an die Diffusionssperrfähigkeit des Stutzens gestellt werden, können beide Materialanordnungen aus Kunststoffen bestehen, die nicht nur miteinander, sondern auch mit dem Behälter 1 eine stoffschlüssige Schmelzverbindung eingehen, wobei dann wiederum nur die eine Materialanordnung, vorzugsweise die radial innere Materialanordnung, die dünner als die radial äußere Materialanordnung 7 ist, den elektrisch leitfähigen Zusatz aufzuweisen braucht. Wenn der Behälter 1 PE oder HDPE aufweist, können beide Materialanordnungen 6 und 7 ebenfalls PE aufweisen.

Da nur die eine Materialanordnung 6 den leitfähigen Zusatz aufweist, kann dann der gesamte Stutzen trotz des die Materialkosten erhöhenden leitfähigen Zusatzes kostengünstiger als bei einschichtiger Ausbildung des gesamten Stutzens mit einem leitfähigen Zusatz hergestellt werden. Die Materialanordnung 7 hat dann wegen des fehlenden leitfähigen Zusatzes eine höhere Chemikalienbeständigkeit und Spannungsrißbeständigkeit. Da beide Materialanordnungen 6 und 7 auch mit dem Behälter eine stoffschlüssige Schmelzverbindung eingehen, kann der geschmolzene Kunststoff der leitfähigen Materialanordnung 6 nicht zwischen die Materialanordnung 7 und den Behälter 1 eindringen und deren Verbindung mit dem Behälter 1 beeinträchtigen.

## Patentansprüche

1. Verfahren zur Herstellung eines Stutzens zum Verbinden einer Fluidleitung mit einem Behälter (1) aus thermoplastischem Kunststoff, wobei der Stutzen eine erste stutzenförmige, wenigstens einschichtige Materialanordnung (6) und eine zweite stutzenförmige, wenigstens einschichtige Materialanordnung (7) aufweist, von denen die erste Materialanordnung (6) dünner als die zweite Materialanordnung ist und beide als zumindest überwiegenden Bestandteil thermisch verformbares Material aufweisen und eine Schmelzverbindung miteinander eingehen, wobei in einem ersten Schritt die erste Materialanordnung (6) im Extrusions- oder Spritzgussverfahren zu einer ebenen Folie oder Platte oder zu einem Schlauch geformt wird, in einem zweiten Schritt die Folie oder Platte durch Tiefziehen oder der Schlauch durch Blasformen in einen ersten Vorformling mit Stutzenkontur geformt wird, in einem dritten Schritt auf der einen Seite des ersten Vorformlings die zweite Materialanordnung (7) im Spritzguss-, Koinjektions- oder Monosandwich-Verfahren mit Stutzenkontur aufgebracht wird, und im Fall des aus der Folie oder Platte gebildeten ersten Vorformlings dessen Boden vor, in oder nach dem dritten Schritt herausgeschnitten wird, **dadurch gekennzeichnet, dass** die zweite Materialanordnung (7) eine Kernschicht (7b) und eine Hautschicht (7a) aufweist, die im Koinjektions- oder Monosandwich-Verfahren hergestellt werden, und dass die Hautschicht (7a) und die erste Materialanordnung (6) eine Schmelzverbindung eingehen, da sie (kompatibel sind, wobei die Hautschicht (7a) PE aufweist und die Kernschicht (7b) eine Diffusionssperrschicht gegenüber Kohlenwasserstoffen ist, die wenigstens eines der Materialien PA; EVOH, PET, PBT, PBN, PEN, POM, Fluorthermoplast und PPS aufweist.

2. Verfahren nach Anspruch 1, **dadurch gekennzeichnet, dass** im ersten Schritt eine erste Schicht (6; 6a) und eine zweite Schicht (7; 6b) und gegebenenfalls eine dritte Schicht (6c), die eine Schmelzverbindung eingehen, im Koextrusionsverfahren oder Schicht für Schicht im Spritzgussverfahren übereinandergeschichtet werden, um die Folie, die Platte oder den Schlauch zu bilden.

3. Verfahren nach Anspruch 2, **dadurch gekennzeichnet, dass** eine der im ersten Schritt gebildeten Schichten ein Haftvermittler oder eine Diffusionssperrschicht gegenüber Kohlenwasserstoffen ist, die wenigstens eines der Materialien PA, EVOH, PE, PET, PBT, PBN, PEN, POM, PP, Fluorthermoplast, PPS und Metall aufweist, und die zweite Materialanordnung (7) auf der zweiten Schicht (6b) aufgebracht wird und wenigstens eines der Materialien PE, PP, PA, PBT, PET, PBN und POM aufweist.

4. Verfahren nach Anspruch 2 oder 3, **dadurch gekennzeichnet, dass** eine andere der im ersten Schritt gebildeten Schichten wenigstens eines der Materialien PA, EVOH, PET, PBT, PBN, PEN, POM, PP, Fluorthermoplast, PPS und eine durch einen elektrisch leitfähigen Zusatz leitfähig gemachte thermoplastische Schicht aufweist.

5. Verfahren nach einem der Ansprüche 1 bis 4, **dadurch gekennzeichnet, dass** die zweite Materialanordnung (7) auf der Innenseite oder der Außenseite des ersten Vorformlings aufgebracht wird.

6. Verfahren nach Anspruch 1, **dadurch gekennzeichnet, dass** die Diffusionssperrschicht (7b) ein Verstärkungsmaterial, insbesondere Glasfasern, aufweist.

7. Verfahren nach Anspruch 1, **dadurch gekennzeichnet, dass** die (einteilige) Hautschicht (7a) auf der Außenseite oder Innenseite des ersten Vorformlings aufgebracht wird und die zweite Materialanordnung (7) in einem mit dem Behälter (1) zu verbindenden ersten Endabschnitt als Flansch (4) und in einem zweiten Endabschnitt außen mit wenigstens einer Halterippe (5) geformt wird und dass die Kernschicht (7b) in den gerippten Endabschnitt und bis an oder in den Flansch (4) eingespritzt wird.

8. Verfahren nach Anspruch 1, **dadurch gekennzeichnet, dass** die erste Materialanordnung (6) eine erste Schicht (6a) und eine zweite Schicht (6b) aufweist, die jeweils gemäß dem ersten Schritt und dem zweiten Schritt zu dem ersten Vorformling und einem zweiten Vorformling geformt werden, und dass in dem dritten Schritt eine erste Schicht der zweiten Materialanordnung im Spritzgussverfahren zwischen dem ersten und dem zweiten Vorformling eingespritzt und in einem vierten Schritt in die noch plastische Seele der ersten Schicht der zweiten Materialanordnung (7) eine dritte Schicht eingespritzt wird, so dass die erste Schicht (7a) der zweiten Materialanordnung (7) eine Hautschicht und die dritte Schicht (7b) eine Kernschicht bildet.

9. Verfahren nach Anspruch 2, **dadurch gekennzeichnet, dass** in dem ersten Schritt drei Schichten (6a-6c) der ersten Materialanordnung (6) zu der Folie, Platte oder dem Schlauch geformt werden, um daraus
den ersten Vorformling (6) gemäß dem zweiten Schritt zu bilden, und dass ein durch Wiederholung der Schritte 1 bis 3 gebildeter zweiter dreischichtiger Vorformling (8) zusammen mit dem ersten dreischichtigen Vorformling (6) in einem Formwerkzeug unter Freihaltung eines Zwischenraums zwischen den Vorformlingen (6, 8) angeordnet und in den Zwischenraum die zweite Materialanordnung (7) in Form einer Hautschicht (7a, 7c) und einer Kernschicht (7b) im Koinjektions- oder Monosandwich-Verfahren eingespritzt wird.

10. Verfahren zur Herstellung eines Stutzens zum Verbinden einer Fluidleitung mit einem Behälter (1) aus thermoplastischem Kunststoff, wobei der Stutzen eine erste, eine zweite und eine dritte rotationssymmetrische Materialanordnung aufweist, die jeweils überwiegend aus thermoplastischem Kunststoff bestehen, wobei die erste Materialanordnung (6) zumindest einschichtig ist, dünner als die zweite Materialanordnung ist und die zweite Materialanordnung (7) umgibt, die dritte Materialanordnung (8) die erste Materialanordnung (6) umgibt, die erste, zweite und dritte Materialanordnung (6, 7, 8) durch eine Schmelzverbindung verbunden sind und einen Flansch (4) des Stutzens auf Seiten des Behälters (1) bilden und die erste Materialanordnung (6) sowie die zweite Materialanordnung (7) bis an eine mit dem Behälter (1) zu verbindende Fläche (10) des Flansches (4) reichen, **dadurch gekennzeichnet, dass** in einem ersten Schritt die erste Materialanordnung (6) im Extrusions- oder Spritzgussverfahren zu einer ebenen Folie oder Platte oder zu einem Schlauch geformt wird, dass in einem zweiten Schritt die Folie oder Platte durch Tiefziehen oder der Schlauch durch Blasformen in einen Vorformling geformt wird, dass in einem dritten Schritt die zweite Materialanordnung (7) auf der einen Seite des Vorformlings im Spritzgussverfahren aufgebracht wird, dass in einem vierten Schritt die dritte Materialanordnung (8) um einen der mit dem Behälter (1) zu verbindenden Fläche (10) abgekehrten Endabschnitt (9) der ersten und zweiten Materialanordnung (6; 7) im Spritzgussverfahren im Bereich des Flansches (4) herumgespritzt wird und dass im Fall des aus der Folie oder Platte gebildeten Vorformlings dessen Boden vor, in oder nach dem dritten Schritt herausgeschnitten wird, wobei die erste Materialanordnung (6) eine Diffusionssperrschicht, die zweite Materialanordnung (7) PE und die dritte Materialanordnung (8) eine Diffusionssperrschicht aufweist.

11. Verfahren nach Anspruch 10, **dadurch gekennzeichnet, dass** die erste Materialanordnung (6) eine Diffusionssperrschicht, die zweite Materialanordnung (7) PE und die dritte Materialanordnung (8) eine Diffusionssperrschicht aufweist.

12. Verfahren nach Anspruch 10 oder 11, **dadurch gekennzeichnet, dass** die erste Materialanordnung (6) und die dritte Materialanordnung (8) elektrisch leitfähige Teilchen aufweisen.

13. Verfahren nach einem der Ansprüche 10 bis 12, **dadurch gekennzeichnet, dass** im ersten Schritt die erste Materialanordnung (6) im Koextrusionsverfahren mehrschichtig hergestellt wird, wobei wenigstens eine der Schichten elektrisch leitfähig ist.

## Claims

1. A method for manufacturing a socket for connecting a fluid conduit to a container (1) made from thermoplastic synthetic material, wherein the socket has a first socket-shaped material arrangement (6) comprising at least one layer and a second socket-shaped material arrangement comprising at least one layer, wherein the first material arrangement (7) is thinner than the second material arrangement (6) and both comprise a thermoplastic material at least as a predominant component and fuse with one another to form a fused joint, wherein in a first step the first material arrangement (6) is molded by extrusion or injection molding to a plane film or plate or to a hose; in a second step the film or the plate is deepdrawn or the hose is blowmolded to a first preform with a socket contour; in a third step the second material arrangement (7) is applied onto one side of the first preform in a socket contour by injection molding, coinjection or a monosandwich process and if the first preform is molded from the film or the plate, his bottom is cutted out before, during or subsequent to the third step, **characterized in, that** the second material arrangement (7) comprises a core layer (7b) and a skin layer (7a) that are produced by coinjection or a monosandwich process, wherein the skin layer (7a) and the first material arrangement (6) fuse with one another since they are compatible, wherein the skin layer (7a) comprises PE and the core layer is a diffusion barrier for hydrocarbons and comprises at least one of the materials PA, EVOH, PET, PBT, PBN, PEN, POM, PP, fluoro-thermoplastic synthetic material, and PPS.

2. The method according to claim 1,
**characterized in, that** in the first step a first layer (6,6a) and a second layer (7,6b) and optionally a third layer (6c) that are fusing with one another are stacked by co-extrusion or layer by layer by injection molding to form the film or the plate or the hose.

3. The method according to claim 2,
**characterized in, that** one of the layers formed in the first step is a binding agent or a diffusion barrier for hydrocarbons, wherein said one layer comprises at least one of the materials PA, EVOH, PE, PET, PBT, PBN, PEN, POM, PP, fluoro-thermoplastic synthetic material, PPS, and metal, and wherein the second material arrangement (7) is applied onto the second layer (6b) and comprises at least one of the materials PE, PP, PA, PBT, PET, PBN, and POM.

4. The method according to claim 2 or 3,
**characterized in, that** another one of the layers formed in the first step comprises at least one of the materials PA, EVOH, PET, PBT, PBN, PEN, POM, PP, fluoro-thermoplastic synthetic material, and PPS and further comprises a thermoplastic layer that is conducting by addition of an electrically conducting additive.

5. The method according to at least one of the claims 1 to 4, **characterized in, that** the second material arrangement (7) is applied to an inner side or an outer side of the first preform.

6. The method according to claim 1,
**characterized in, that** the diffusion barrier comprises (7b) a reinforcement material, in particular glass fiber.

7. The method according to claim 1,
**characterized in, that** the (one-piece) skin layer (7a) is applied to an outer side or an inner side of the first preform and wherein the second material arrangement (7) is formed in a first end section that is to be connected to a container (1) and is shaped as a flange (4), and in a second end section having at least one outer securing rib (5), wherein the core layer (7b) is injected into the second end section up to or into the flange (4).

8. The method according to claim 1,
**characterized in, that** the first material arrangement (6) comprises a first layer (6a) and a second layer (6b), formed in the first step and in the second step as the first preform and a second preform, respectively, wherein in the third step a first layer of the second material arrangement (7) is injected by injection molding between the first and second preforms, and wherein in an additional fourth step a third layer is injected into a still plastic core of the first layer of the second material arrangement so that the first layer (7a) of the second material arrangement (7) forms a skin layer and the third layer (7b) forms a core layer.

9. The method according to claim 2,
**characterized in, that** in the first step three layers (6a-6c) of the first material arrangement (6) are shaped to the film or the plate or the hose to form a first preform (6) according to the second step, and that a second triple layerd preform (8), which is prepared by repeating the steps 1 to 3, is arranged with the first triple layerd preform (6) in a mold so as to create an intermediate space between the first and second preforms (6, 8) and injecting by coinjection or a monosandwich process into the intermediate space (7b) the second material arrangement (7) comprising a skin layer (7a,7c) and a core layer (7b).

10. A method for manufacturing a socket for connecting a fluid conduit to a container (1) made from thermoplastic synthetic material wherein the socket has a first, a second, and a third material arrangements (6,7,8) having rotational symmetry, and each comprising predominantly of thermoplastic synthetic material, wherein the first material arrangement (6) comprises at least one layer, is thinner as the second material arrangement and surrounds the second material arrangement (7), wherein the third material arrangement (7) surrounds the first material, wherein the first, second, and third material arrangements (6,7,8) are connected by a fused joint and form a flange (4) of the socket facing the container (1), wherein the first material arrangement and the second material arrangement extend to a surface of the flange to be connected to the container; **characterized in, that**
in a first step the first material arrangement (6) is formed by extrusion or injection molding to a plane film or plate or to a hose, that in a second step the film or the plate is formed by deepdrawing the hose or is formed by blowmolding to a first preform with a socket contour, that in a third step the second material arrangement is applied by injection molding (7) onto one side of the preform, that in a fourth step the third material arrangement (8) is applied by injection molding in the area of the flange about an end section of the first and second material arrangement (6,7) which end section is facing away from a surface of the flange (4) to be connected to the container, and that, if the first preform is molded from the film or the plate, his bottom is cutted out of the first preform (8) before, during or subsequent to the step 3), wherein the first material arrangement (6) comprises a diffusion barrier, the second material arrangement (7) comprises PE, and the third material arrangement (8) comprises a diffusion barrier.

11. The method according to claim 10,
**characterized in, that** the first material arrangement (6) comprises a diffusion barrier, the second material arrangement (7) comprises PE, and the third material arrangement (8) comprises a diffusion barrier.

12. The method according to claim 10 or 11,
**characterized in, that** the first and the third material arrangements (8) comprise electrically conducting particles.

13. The method according to at least one of the claims 10 to 12, **characterized in, that** the first material arrangement (6) comprises several layers coextruded in the first step, wherein at least one of the layers is electrically conducting.

## Revendications

1. Procédé de fabrication d'un embout pour la liaison d'une conduite fluidique avec un récipient (1) en thermoplastique, l'embout présentant un premier ensemble de matériau (6) en forme d'embout, au moins monocouche et un second ensemble de matériau (7) en forme d'embout, au moins monocouche, dont le premier ensemble de matériau (6) est plus mince que le second ensemble de matériau et les deux présentent, comme constituant au moins principal, un matériau thermodéformable et réalisent une liaison par fusion l'un avec l'autre, le premier ensemble de matériau (6) étant formé dans une première étape dans le procédé de moulage par extrusion ou injection en une feuille plane ou une plaque ou en un tuyau, la feuille ou la plaque étant formée dans une deuxième étape par emboutissage profond ou le tuyau par moulage par soufflage dans une première ébauche avec un contour d'embout, le second ensemble de matériau (7) étant appliqué dans une troisième étape sur un côté de la première ébauche dans le procédé de moulage par injection, de coinjection ou monosandwich avec un contour d'embout, et dans le cas de la première ébauche formée dans la feuille ou la plaque, son bord devant être découpé avant, pendant ou après la troisième étape, **caractérisé en ce que** le second ensemble de matériau (7) présente une couche centrale (7b) et une couche de peau (7a) qui sont fabriquées dans le procédé de coinjection ou monosandwich, et **en ce que** la couche de peau (7a) et le premier ensemble de matériau (6) réalisent une liaison par fusion, étant donné qu'ils sont compatibles, la couche de peau (7a) présentant du PE et la couche centrale (7b) étant une couche de barrage de diffusion par rapport aux hydrocarbures, qui présente au moins l'un des matériaux suivants PA, EVOH, PET, PBT, PBN, PEN, POM, thermoplaste fluoré et PPS.

2. Procédé selon la revendication 1, **caractérisé en ce qu'**une première couche (6 ; 6a) et une seconde couche (7 ; 6b) et éventuellement une troisième couche (6c) qui réalisent une liaison par fusion, sont superposées dans le procédé de coextrusion ou couche par couche dans le procédé de moulage par injection dans la première étape afin de former la feuille, la plaque ou le tuyau.

3. Procédé selon la revendication 2, **caractérisé en ce que** l'une des couches formées dans la première étape est un agent adhésif ou une couche de barrage de diffusion par rapport aux hydrocarbures, qui présente au moins l'un des matériaux suivants PA, EVOH, PE, PET, PBT, PBN, PEN, POM, PP, thermoplaste fluoré, PPS et métal, et **en ce que** le second ensemble de matériau (7) est appliqué sur la seconde couche (6b) et présente au moins l'un des matériaux suivants PE, PP, PA, PBT, PET, PBN et POM.

4. Procédé selon la revendication 2 ou 3, **caractérisé en ce qu'**une autre des couches formées dans la première étape présente au moins l'un des matériaux suivants PA, EVOH, PET, PBT, PBN, PEN, POM, PP, thermoplaste fluoré, PPS et une couche thermoplastique rendue électroconductrice par un additif électroconducteur.

5. Procédé selon l'une quelconque des revendications 1 à 4, **caractérisé en ce que** le second ensemble de matériau (7) est appliqué sur le côté intérieur ou le côté extérieur de la première ébauche.

6. Procédé selon la revendication 1, **caractérisé en ce que** la couche de barrage de diffusion (7b) présente un matériau de renforcement, en particulier des fibres de verre.

7. Procédé selon la revendication 1, **caractérisé en ce que** la couche de peau (7a) (en une seule partie) est appliquée sur le côté extérieur ou le côté intérieur de la première ébauche et le second ensemble de matériau (7) est formé dans une première section d'extrémité à relier avec le récipient (1) comme une bride (4) et dans une seconde section d'extrémité à l'extérieur avec au moins une nervure de retenue (5) et **en ce que** la couche centrale (7b) est injectée dans la section d'extrémité nervurée et jusqu'à ou dans la bride (4).

8. Procédé selon la revendication 1, **caractérisé en ce que** le premier ensemble de matériau (6) présente une première couche (6a) et une seconde couche (6b) qui sont formées respectivement selon la première étape et la deuxième étape en la première ébauche et une seconde ébauche, et **en ce que** dans la troisième étape, une première couche du second ensemble de matériau est injecté dans le procédé de moulage par injection entre la première et la seconde ébauche et dans une quatrième étape, une troisième couche est injectée dans l'âme encore plastique de la première couche du second ensemble de matériau (7) de sorte que la première couche (7a) du second ensemble de matériau (7) forme une couche de peau et la troisième couche (7b) une couche centrale.

9. Procédé selon la revendication 2, **caractérisé en ce que** dans la première étape, trois couches (6a-6c) du premier ensemble de matériau (6) sont formées en la feuille, la plaque ou le tuyau afin de former dans celui-ci la première ébauche (6) selon la deuxième étape, et **en ce qu'**une seconde ébauche (8) à trois couches formée par répétition des étapes 1 à 3 est disposée conjointement avec la première ébauche (6) à trois couches dans un outil de moulage en préservant un espace intermédiaire entre les ébauches (6, 8) et le second ensemble de matériau (7) est injecté dans l'espace intermédiaire sous la forme d'une couche de peau (7a, 7c) et d'une couche centrale (7b) dans le procédé de coinjection ou monosandwich.

10. Procédé de fabrication d'un embout pour la liaison d'une conduite fluidique avec un récipient (1) en thermoplastique, l'embout présentant un premier, un deuxième et un troisième ensembles de matériau symétriques en rotation, lesquels se composent chacun principalement de thermoplastique, le premier ensemble de matériau (6) étant au moins monocouche, plus mince que le deuxième ensemble de matériau et entourant le deuxième ensemble de matériau (7), le troisième ensemble de matériau (8) entourant le premier ensemble de matériau (6), le premier, le deuxième et le troisième ensemble de matériau (6, 7, 8) étant reliés par une liaison par fusion et formant une bride (4) de l'embout du côté du récipient (1) et le premier ensemble de matériau (6) ainsi que le deuxième ensemble de matériau (7) parvenant jusqu'à une surface (10) de la bride (4) à relier avec le récipient (1), **caractérisé en ce que** dans une première étape, le premier ensemble de matériau (6) est formé dans le procédé de moulage par extrusion ou injection en une feuille plane ou une plaque ou en un tuyau, **en ce que** dans une deuxième étape, la feuille ou la plaque est formée par emboutissage profond ou le tuyau par moulage par soufflage dans une ébauche, **en ce que** dans une troisième étape, le deuxième ensemble de matériau (7) est appliqué sur un côté de l'ébauche dans le procédé de moulage par injection, **en ce que** dans une quatrième étape, le troisième ensemble de matériau (8) est injecté autour d'une section d'extrémité (9) éloignée de la surface (10) à relier avec le récipient (1) du premier et deuxième ensemble de matériau (6 ; 7) dans le procédé de moulage par injection dans la zone de la bride (4) et **en ce que** dans le cas de l'ébauche formée dans la feuille ou la plaque, son bord est découpé avant, pendant ou après la troisième étape, le premier ensemble de matériau (6) présentant une couche de barrage de diffusion, le deuxième ensemble de matériau (7) du PE et le troisième ensemble de matériau (8) une couche de barrage de diffusion.

11. Procédé selon la revendication 10, **caractérisé en ce que** le premier ensemble de matériau (6) présente une couche de barrage de diffusion, le deuxième ensemble de matériau (7) du PE et le troisième ensemble de matériau (8) une couche de barrage de diffusion.

12. Procédé selon la revendication 10 ou 11, **caractérisé en ce que** le premier ensemble de matériau (6) et le troisième ensemble de matériau (8) présentent des particules électroconductrices.

13. Procédé selon l'une quelconque des revendications 10 à 12, **caractérisé en ce que** dans la première étape, le premier ensemble de matériau (6) est fabriqué en plusieurs couches dans le procédé de coextrusion, au moins l'une des couches étant électroconductrice.
